# EUROPEAN PATENT SPECIFICATION

(11) **EP 3 626 897 B1**
(45) Date of publication and mention of the grant of the patent: **23.06.2021**
(21) Application number: 19197428.6
(22) Date of filing: 14.09.2019
(51) Int. Cl.: E01C 11/22, E03F 3/04, E03F 5/04

(54) **SLOTTED DRAIN SECTION, KIT AND METHOD OF ASSEMBLING**
SCHLITZRINNE-ABSCHNITT, KIT UND VERFAHREN ZUM ZUSAMMENBAUEN
SECTION DE DRAIN À FENTE, KIT ET PROCÉDÉ D'ASSEMBLAGE

(30) Priority: 14.09.2018 GB 201814953
(43) Date of publication of application: 25.03.2020
(73) Proprietor: Tubosider (United Kingdom) Limited, St Helens, Merseyside WA9 3GL (GB)
(72) Inventor: FEGAN, Mark Robert, St Helens, Merseyside WA9 3GL (GB); RAWCLIFFE, Paul Gerard, St Helens, Merseyside WA9 3GL (GB)
(74) Representative: Appleyard Lees IP LLP

(56) References cited:
- EP-A1- 2 520 728
- EP-A2- 1 705 298
- EP-A2- 2 522 773
- AU-B2- 733 361
- GB-A- 2 390 630
- GB-A- 2 406 351

## Description

### Field

The present invention relates to slot drains and to methods of manufacture, assembly and installation of slots drains.

### Background to the Invention

Discharge of surface water into a drainage system may be regulated. Surface water includes water from precipitation such as rain or snow falling on a property, curtilage, roadway or paved area, for example, that has not seeped into the ground and is discharged into the drainage system. Typically, the drainage system may comprise a combined wastewater (i.e. sewage water) and stormwater system or may comprise a wastewater system and a separate stormwater system. A flowrate capacity of the drainage system may, for example, be sufficient for surface water resulting from typical rainfalls. However, the flowrate capacity of the drainage system may, for example, be insufficient for surface water resulting from atypical rainfalls, such as sustained rainfall or storms. That is, a discharge flowrate of surface water into the drainage system may be in excess of the flowrate capacity of the drainage system. So as not exceed the flowrate capacity of the drainage system, discharge of surface water from into the drainage system may be controlled by mandating maximum discharge flowrates of surface water into the drainage system. This may be known also as rainfall runoff management. The maximum discharge flowrates of surface water into the drainage system may be according to, for example, the flowrate capacity of the drainage system, a volume of surface water, a type or size of property or an area of curtilage. For example, a maximum discharge flowrate of surface water into the drainage system for a typical residential property may be mandated around 0.2 dm³s⁻¹. Typically, restrictors such as flow control devices may be provided to restrict maximum discharge flowrates of surface water into drainage systems. However, since surface water may be received by a roadway at a rate higher than a mandated maximum rate of discharge into the drainage system, for example, excess surface water may accumulate on the roadway. Hence, rapid clearance (also known as evacuation) of the excess surface water from the roadway is required, for safety, for example via stormwater drains, for example slot drains. Typically, the stormwater drains are fluidically coupled to stormwater tanks (also known as accumulators or stormwater accumulation tanks) provided upstream of restrictors to accumulate the excess surface water. The accumulated surface water then discharges at flowrates controlled by the restrictors and typically continues to discharge after rain has lessened or ceased. In this way, the stormwater drains provide rapid clearance of stormwater while the stormwater tanks and restrictors together provide attenuation of surface water discharged into drainage systems, limiting peak flowrates and increasing durations of flow into the drainage systems.

However, conventional stormwater drains and/or stormwater tanks may be disadvantageous. For example, conventional stormwater drains and/or stormwater tanks may require relatively complex and/or costly installations. For example, conventional stormwater drains and/or stormwater tanks may be relatively large, restricting storage and/or transport thereof.

GB2390630A describes a drainage channel section comprising a longitudinally extending pipe portion, a number of longitudinally spaced projections communicating with the pipe portion and a longitudinal channel supported by and communicating with the projections and which defines a longitudinal slot into which water passes. GB2406351A describes an inlet former, for use in association with a drainage channel for use in a surface drainage arrangement, comprises a longitudinal slot that lies, in use, in a surface to be drained and a conduit via which liquid can drain, in use, from the surface through the former, wherein the former comprises one or more transverse openings into which a material in which the former is embedded, in use, can extend from one or both sides of the former to form a structural bridge member. EP1705298A2 describes a retention channel module for constructing a retention channel, especially for underground storage of surface water, comprises a channel lower part and a channel upper part having a semicircular inner cross-section that can be interconnected via extension parts along their longitudinal extension to form a tubular body. EP2520728A1 describes a The inlet module has an inlet feed hopper with an inlet opening and a drain pipe for introducing surface water in a dewatering device. EP2522773A2 describes a drainage system comprising a hollow catchment chamber having an elongate mouth through which liquid enters the chamber, and a body having first and second angled surfaces and that direct the flow of liquid collected in the chamber to an outlet. AU733361 B2 describes a surface drainage system comprising a grate in a shallow channel with a series of closely spaced outlet spigots longitudinally aligned in the bottom for connection to sockets protruding upwardly from sidewall of a drain pipe below.

Hence, there is a need to improve attenuation of surface water discharged into drainage systems.

### Summary of the Invention

It is one aim of the present invention, amongst others, to provide a slot drain which at least partially obviates or mitigates at least some of the disadvantages of the prior art, whether identified herein or elsewhere. In this way, attenuation of surface water discharged into drainage systems may be improved.

A first aspect provides a slot drain section comprising a set of channels, including a first channel, and a pipe;
wherein the first channel comprises:
an open side arranged to provide a slot to receive water therethrough;
a first channel side wall and a second channel side wall, mutually opposed and spaced apart;
a third channel side wall, opposed to the open side, extending between the first channel side wall and the second channel side wall; and
wherein the third channel side wall comprises a set of outlets, including a first outlet and a second outlet, mutually spaced apart;
wherein the pipe comprises:
   a pipe side wall and a set of inlets, including a first inlet and a second inlet, mutually spaced apart and provided through the pipe side wall;
   wherein the slot drain section is arrangeable in:
      a first configuration, wherein the first inlet and the second inlet are uncoupled from the first outlet and from the second outlet, respectively; and
      a second configuration, wherein the first inlet and the second inlet are releasably coupled to the first outlet and to the second outlet, respectively, and wherein the first channel and the pipe are mutually spaced apart by a first spacing;
      characterised by:
         wherein the first channel comprises a set of spacers, including a first spacer and a second spacer, arranged to space apart the first channel side wall and the second channel side wall, to releasably couple the first channel side wall and the second channel side wall and to releasably couple with the first channel side wall and with the second channel side wall;
         wherein the first spacer comprises a first set of male coupling members and a second set of male coupling members;
         wherein the first channel side wall comprises a first set of female coupling members, corresponding with the first set of male coupling members; and
         wherein the second channel side wall comprises a second set of female coupling members, corresponding with the second set of male coupling members.

According to a second aspect, there is provided a slot drain comprising a slot drain section according to the first aspect, a first pipe end wall, a second pipe end wall and a flow attenuator;
wherein the flow attenuator is arranged to attenuate, in use, a flowrate of water out of the pipe.

According to a third aspect, there is provided a method of assembling a channel for a slot drain section according to the first aspect, wherein the method comprises:
coupling, with the first spacer and the second spacer, the first channel side wall and the second channel side wall.

According to a fourth aspect, there is provided a kit of parts for a slot drain section comprising a set of channels, including a first channel, and a pipe, the kit comprising:
a first channel side wall, a second channel side wall, a third channel side wall and a set of spacers, including a first spacer and a second spacer, for spacing apart the first channel side wall and the second channel side wall, for releasably coupling the first channel side wall and the second channel side wall and for releasably coupling with the first channel side wall and with the second channel side wall;
wherein the first spacer comprises a first set of male coupling members and a second set of male coupling members;
wherein the first channel side wall comprises a first set of female coupling members, corresponding with the first set of male coupling members; and
wherein the second channel side wall comprises a second set of female coupling members, corresponding with the second set of male coupling members;
wherein the third channel side wall comprises a set of outlets, including a first outlet and a second outlet, mutually spaced apart;
wherein the pipe comprises a pipe side wall and a set of inlets, including a first inlet and a second inlet, mutually spaced apart and provided through the pipe side wall.

### Detailed Description of the Invention

According to the present invention there is provided a slot drain section, as set forth in the appended claims. Also provided is a slot drain, a method of assembling a channel for a slot drain section and a kit of parts for a slot drain section. Other features of the invention will be apparent from the dependent claims, and the description that follows.

The first aspect provides a slot drain section comprising a set of channels, including a first channel, and a pipe;
wherein the first channel comprises:
an open side arranged to provide a slot to receive water therethrough;
a first channel side wall and a second channel side wall, mutually opposed and spaced apart;
a third channel side wall, opposed to the open side, extending between the first channel side wall and the second channel side wall; and
wherein the third channel side wall comprises a set of outlets, including a first outlet and a second outlet, mutually spaced apart;
wherein the pipe comprises:
   a pipe side wall and a set of inlets, including a first inlet and a second inlet, mutually spaced apart and provided through the pipe side wall;
   wherein the slot drain section is arrangeable in:
      a first configuration, wherein the first inlet and the second inlet are uncoupled from the first outlet and from the second outlet, respectively; and
      a second configuration, wherein the first inlet and the second inlet are releasably coupled to the first outlet and to the second outlet, respectively, and wherein the first channel and the pipe are mutually spaced apart by a first spacing;
      characterised by:
         wherein the first channel comprises a set of spacers, including a first spacer and a second spacer, arranged to space apart the first channel side wall and the second channel side wall, to releasably couple the first channel side wall and the second channel side wall and to releasably couple with the first channel side wall and with the second channel side wall;
         wherein the first spacer comprises a first set of male coupling members and a second set of male coupling members;
         wherein the first channel side wall comprises a first set of female coupling members, corresponding with the first set of male coupling members; and
         wherein the second channel side wall comprises a second set of female coupling members, corresponding with the second set of male coupling members.

Since the slot drain section is arrangeable in the first configuration, in which the first channel and the pipe are separate (i.e. mutually uncoupled), storage and/or transportation of the slot drain section is facilitated. For example, a plurality of such channels and/or a plurality of such pipes may be stacked separately and hence more efficiently on a lorry, for example, when the slot drain section is arranged in the first configuration (i.e. a storage or transportation configuration). In this way, storage and/or transportation costs and/or a carbon footprint associated with the slot drain section, may be reduced. Additionally and/or alternatively, a size of the pipe may be increased. In contrast, stacking of a plurality of slot drain sections, when arranged in the second configuration, is less efficient. For example, the first channel may extend radially away from the pipe, thereby increasing a bulk or an envelope of the slot drain section and reducing thereby reducing a stacking efficiency thereof.

Furthermore, since the slot drain section is arrangeable in the first configuration, in which the first channel and the pipe are separate (i.e. mutually uncoupled), installation of the slot drain section is facilitated. For example, the pipe may be positioned, for example according to a desired gradient of the pipe and/or separately from a desired gradient of the first channel, in an excavation, wherein the first inlet and the second inlet are positioned uppermost. Subsequently, the excavation may be backfilled, in part, (i.e. a first backfilling step), for example with aggregate and/or soil, wherein the first inlet and the second inlet remain exposed. Since the first channel is not coupled to the pipe during this backfilling, damage to the first channel is avoided. Further, this backfiling may be completed sooner, reducing a hazard due to the unfilled excavation. Later, the first inlet and the second outlet may be coupled to the first outlet and the second outlet, respectively, before backfilling, for example with aggregate, concrete, asphalt and/or paving, in part the remainder of the excavation (i.e. a second backfilling step). Thus, the slot drain in the first configuration facilitates both storage and/or transportation as well as installation.

In the second configuration (i.e. an in use or installed configuration), the slot provides rapid clearance of surface water. The water received through the slot flows through the first channel, for example over the third channel side wall, into the pipe via the first outlet and/or the second outlet and the first inlet and/or the second inlet, respectively. The pipe provides at least a part of an accumulator and thus the water is accumulated in the pipe and may be discharged, for example downstream of the pipe, at an attenuated flowrate, via a flow attenuator, into a drainage system. Thus, the slot drain, in the second configuration, synergistically integrates three functions: the slot for rapid clearance of the surface water, transport of the water in the pipe and accumulation of the water in the pipe, discharge of which into the drainage system is attenuated by the flow attenuator. In this way, attenuation of surface water discharged into drainage systems is improved. It should be understood that in the second configuration, the slot drain section and the pipe are subterranean, while the slot is exposed to the surface. Generally, a flow attenuator comprises and/or is a flow control device, for example a vortex flow control, an orifice plate, a pump, a pipe acting as a throttle pipe, a control chamber and/or a penstock. Other flow attenuators are known.

In other words, in the second configuration, the pipe serves as temporary storage for water removed from the surface and/or comprises and/or is a carrier to transport water downstream which has been removed from the surface. Additionally and/or alternatively, the pipe may comprise and/or be a perforated pipe which serves as temporary storage while releasing collected water to the subterranean ground.

It should be understood that the slot drain section is a part of a slot drain (also known as a slotted drain, a linear drain, a channel drain, or a trench drain). Typically, a plurality of slot drain sections may be coupled together, for example ends of respective pipes of adjacent slot drain sections may be coupled, as required. Terminal open ends of the pipes may be closed, for example using pipe end walls, such as bulkheads or dished ends. In this way, a slot drain having a required channel length and/or pipe volume may be provided by coupling the plurality of slot drain sections. The slot drain section may have a length in a range from 0.5 m to 14 m, preferably in a range from 1 m to 6 m, for example 1 m, 2 m or 3 m, according to a surface to be cleared of water. Sizes of the first channel and of the pipe are described below.

It should be understood that water and/or surface water may comprise solids for example suspended solids such as organic or inorganic particulates and/or debris including non-buoyant debris such as stones, sand or soil and/or buoyant debris such as leaves or wood. It should be understood that water and/or surface water may comprise contaminants for example liquid contaminants such as oil.

The slot drain section comprises the set of channels, including the first channel. In one example, the set of channels comprises M channels, wherein M is a natural number greater than zero, for example 1, 2, 3, 4, 5, 6, 7, 8, 9 or 10. In one example, a length of the first channel is a fractional length of a length of the pipe, as described below. That is, the length of the first channel may be less than the length of the pipe. In one example, the length of the first channel is (1/M) of the length of the pipe. In one example, the length of the pipe is a sum of the lengths of the M channels. For example, the length of the pipe may define, for example equal, the length of the slot drain section and the length of each of M channels may be (1/M) thereof. For example, if the length of the pipe is 3 m, the length of the slot drain section is also 3 m and if the set of channels includes 2 channels (i.e. M = 2), then the length of each channel is 1.5 m. More generally, a total length of the M channels may be at most or equal to the length of the pipe and the M channels may have different lengths. For example, if the length of the pipe is 5 m, the length of the slot drain section is also 5 m and if the set of channels includes 3 channels (i.e. M = 3), then the length of two channels may be 2 m and the length of one channel may be 1 m. Other combinations are possible. Furthermore, a total length of the M channels may be less than the length of the pipe. For example, a gap may be provided between adjacent channels. Such a gap may span under a path or under a road, for example.

Generally, the first channel is elongate, having tapering, parallel or curved sides (i.e. the first channel side wall and the second channel side wall) and a planar or a non-planar base (i.e. the third channel side wall).

The first channel comprises the open side arranged to provide a slot (also known as an aperture) to receive water therethrough. It should be understood that the slot thus provides an inlet into the first channel for the water. In use, the slot is generally arranged level with a surrounding surface or recessed therebelow, for example by a distance in a range from 1 mm to 10 mm. Generally, an open area of the slot should be maximised. However, grills, as described below, reduce the open area below 100%. In one example, the slot has an open area in a range from 50% to 100%, preferably in a range from 60% to 90%, more preferably in a range from 70% to 80%, as a percentage of the area between the first channel side wall and the second channel side wall. In one example, the slot has a rectangular or an arcuate shape.

The first channel comprises the first channel side wall and the second channel side wall, mutually opposed and spaced apart. In use, the first channel side wall and the second channel side wall are generally oriented vertically. In one example, the first channel side wall and the second channel side wall are similar, for example identical, interchangeable or transposable. In one example, the first channel side wall and the second channel side wall are paired, for example handed. In one example, the first channel side wall and the second channel side wall are mutually substantially parallel and/or parallel. In one example, respective free edges of the first channel side wall and the second channel side wall define opposed sides of the slot. In one example, respective free edges of the first channel side wall and the second channel side wall are substantially parallel or parallel. In one example, a spacing between the first channel side wall and the second channel side wall is in a range from 5 mm to 250 mm, preferably in a range from 10 mm to 150 mm, more preferably in a range from 25 mm to 75 mm. In one example, a spacing between the first channel side wall and the second channel side wall is substantially constant or constant. In one example, a spacing between the first channel side wall and the second channel side wall is non-constant. For example, the spacing between the first channel side wall and the second channel side wall may be relatively greater proximal the open side than proximal the third channel side wall (i.e. funnelled), or vice versa (i.e. flared).

The first channel comprises the third channel side wall, opposed to the open side, extending between the first channel side wall and the second channel side wall. In use, the third channel side wall is generally oriented horizontally. It should be understood that the third channel side wall extends completely (i.e. spans) between the first channel side wall and the second channel side wall, such that there are no passageways between the first channel side wall and the third channel side wall or between the second channel side wall and the third channel side wall, through which water would otherwise leak. The third channel side wall comprises the set of outlets, including the first outlet and the second outlet, mutually spaced apart. In one example, the set of outlets comprises N outlets, wherein N is a natural number greater than zero, for example 1, 2, 3, 4, 5, 6, 7, 8, 9 or 10. In one example, the first outlet and the second outlet are adjacent outlets. In one example, the spacing between the first outlet and the second outlet is in a range from 50 mm to 1000 mm, preferably in a range from 125 mm to 750 mm, more preferably in a range from 250 mm to 500 mm.

In one example, a cross-sectional shape of the first channel is constant along at least a part of a length thereof, for example along a complete length thereof. In one example, a cross-sectional shape of the first channel is substantially U-shaped, having substantially parallel or parallel planar (i.e. flat) sides (i.e. the first channel side wall and the second channel side wall) and a planar (i.e. flat) or a non-planar (e.g. curved for example concave) base (i.e. the third channel side wall). In one example, a cross-sectional shape of the first channel is substantially V-shaped, having planar tapering sides (i.e. the first channel side wall and the second channel side wall) and a planar (i.e. flat) or a non-planar (e.g. curved for example concave) base (i.e. the third channel side wall). In one example, a cross-sectional shape of the first channel is substantially C-shaped, having non-planar (e.g. curved for example concave) sides (i.e. the first channel side wall and the second channel side wall) and a planar (i.e. flat) or a non-planar (e.g. curved for example concave) base (i.e. the third channel side wall). In one example, the first channel side wall, the second channel side wall and the third channel sidewall therebetween form an arcuate cross-sectional shape having a constant radius.

In one example, the third side wall is transverse to the first channel side wall and/or the second channel side wall. In one example, the first channel side wall, the second channel side wall and the third channel sidewall are planar. In one example, the first channel side wall and the second channel side wall are coplanar (i.e. parallel) and the third channel sidewall is orthogonal to the first channel side wall and the second channel side wall.

Generally, the first channel is elongate, having tapering, parallel or curved sides (i.e. the first channel side wall and the second channel side wall) and a flat or a curved base (i.e. the third channel side wall).

The slot drain section comprises the pipe (i.e. a tube). It should be understood that the pipe provides at least a part of an accumulator for accumulating water, as described above. The pipe side wall defines, at least in part, a volume within the pipe for accumulating water. Hence, a cross-sectional area of the pipe may be relatively large, corresponding to a diameter in a range from 200 mm to 4000 mm, preferably in a range from 300 mm to 3600 mm, for example 600 mm, 900 mm, 1200 mm, 1400 mm, 1500 mm or 1800 mm. In one example, a cross-sectional area of the pipe may be relatively large, corresponding to a diameter in a range from 200 mm to 4000 mm, preferably in a range from 300 mm to 3600 mm, for example 600 mm, 900 mm, 1200 mm, 1400 mm, 1500 mm or 1800 mm. In one example, a cross-sectional area of the pipe may be relatively large, corresponding to a diameter in a range from 20 cm to 400 cm, preferably in a range from 30 cm to 360 cm, for example 60 cm, 90 cm, 120 cm, 140 cm, 150 cm or 180 cm. In one example, a cross-sectional area of the pipe may be relatively large, corresponding to a diameter in a range from 0.2 m to 4 m, preferably in a range from 0.3 m to 3.6 m, for example 0.6 m, 0.9 m, 1.2 m, 1.4 m, 1.5 m or 18 m. In one example, a length of the pipe is in a range from 1 m to 20 m, preferably in a range from 3 m to 14 m. In this way, the pipe may be readily transported on a standard flatbed lorry, for example.

The pipe comprises the pipe side wall and the set of inlets, including the first inlet and the second inlet, mutually spaced apart and provided through the pipe side wall. That is, the first inlet and the second inlet, provided through the pipe side wall, are separated by at least a portion of the pipe side wall. That is, the first inlet and the second inlet are discrete (i.e. mutually isolated in the pipe side wall). In this way, a structural integrity of the pipe is improved compared, for example, with an elongated perforation through the pipe side wall, such as along substantially a complete length of the pipe. In one example, the first inlet and the second inlet are mutually spaced apart, for example axially with respect to the pipe, by at least one cross-sectional size, for example one diameter, of the first inlet and/or the second inlet, preferably at least two cross-sectional sizes, more preferably at least three cross-sectional sizes. In one example, the first inlet and the second inlet are aligned axially (i.e. longitudinally) with respect to the pipe. In one example, all the inlets of the set of inlets are aligned axially with respect to the pipe. In one example, a total axial length of the inlets of the set of inlets, as a proportion of the length of the pipe, is in a range from 10% to 90%, preferably in a range from 25% to 75%, more preferably in a range from 40% to 60%. It should be understood that the total axial length of the inlets of the set of inlets is the sum of the sizes of the respective inlets measured axially with respect to the pipe. Generally, in order to permit a required flowrate of water into the pipe from the first channel, a relatively larger number P of inlets (as described below) is preferred, wherein each inlet has a relatively smaller cross-sectional size, rather than a relatively smaller number P of inlets, wherein each inlet has a relatively larger cross-sectional size. In other words, more smaller inlets is preferred over fewer larger inlets, so as to better maintain structural integrity of the pipe.

In one example, the set of inlets comprises P inlets, wherein P is a natural number greater than zero, for example 1, 2, 3, 4, 5, 6, 7, 8, 9 or 10. In one example, the set of outlets comprises N outlets and the set of inlets comprises P inlets, wherein N = P. In one example, the first inlet and the second inlet are adjacent inlets. In one example, the spacing between the first inlet and the second inlet is in a range from 50 mm to 1000 mm, preferably in a range from 125 mm to 750 mm, more preferably in a range from 250 mm to 500 mm. In one example, the first inlet and the second inlet correspond with the first outlet and the second outlet, respectively. For example, spacings of the first inlet and the second inlet may correspond with the first outlet and the second outlet, for example, be the same. For example, sizings and/or cross-sectional shapes of the first inlet and the second inlet may correspond with the first outlet and the second outlet, for example, the first outlet may be received in the first inlet or vice versa and the second outlet may be received in the second inlet or vice versa. In this way, the first inlet and the second inlet may be releasably coupled directly to the first outlet and to the second outlet, respectively. In one example, the first outlet is received in the first inlet and the second outlet is received in the second inlet. In this way, the first inlet and the second inlet may be releasably coupled directly to the first outlet and to the second outlet, respectively, and leakage of the water is reduced. It should be understood that a cross-sectional shape of the first inlet, for example, is not required to be the same as a cross-sectional shape of the first outlet, so that the first outlet may be received in the first inlet. For example, the first outlet may have a polygonal, for example rectangular or square, cross-sectional shape sized to be received in the first inlet, having a circular cross-sectional shape.

In one example, the first outlet and the second outlet comprise a first stub end and a second stub end, respectively and wherein the first inlet and the second inlet comprise a first socket and a second socket, respectively. Generally, stub ends are short lengths of tube, for example of square or circular cross-sectional shape. Generally, sockets have similar shapes to the corresponding stub ends and have internal dimensions (for example, internal diameter) of at least the external dimensions (for example, external diameter) of the corresponding stub ends. In one example, a first aperture and a second aperture are provided, for example by cutting or machining, in the pipe side wall and the first socket and the second socket are attached to the pipe, for example by adhesion or welding, surrounding the first aperture and the second aperture, respectively. In one example, the first socket and the second socket are integrally formed with the pipe, for example by moulding or casting.

The slot drain section is arrangeable in:
the first configuration, wherein the first inlet and the second inlet are uncoupled from the first outlet and from the second outlet, respectively; and
the second configuration, wherein the first inlet and the second inlet are releasably coupled to the first outlet and to the second outlet, respectively.

The advantages of the first configuration and the second configuration are described above.

The first channel and the pipe are mutually spaced apart by the first spacing in the second configuration. It should be understood that a spacing between the first channel and the pipe is not required to be constant along respective lengths thereof. For example, the pipe may be arranged at a first angle of inclination equivalent to a gradient of 1 in 1000 to the horizontal, so as to facilitate transport of water and/or as required according to installation specifications, while the first channel, at the surface, may be arranged at a second angle of inclination, for example horizontally and/or according to an angle of the surface.

In one example, the slot drain section comprises a set of conduits, including a first conduit and a second conduit, arrangeable to releasably couple the first inlet and the second inlet to the first outlet and the second outlet, respectively. In this way, a height of the first channel may be reduced and/or a depth of installation of the pipe may be increased, since the conduits fluidically couple the first channel and the pipe. By reducing the height of the first channel, material usage is reduced while deformation due to loadings, for example lateral loadings such as due to soil pressure, on the first side wall and the second side wall, for example, is reduced. In contrast, conduits having round or square cross-sectional shapes may better resist such soil pressure. Furthermore, lengths of the conduits may be adjusted according to specific installation requirements. For example, the conduits may be cut to desired lengths from stock lengths, thereby facilitating custom installation. Additionally and/or alternatively, conduits may be provided having different lengths and selected accordingly.

In one example, the slot drain section is arrangeable in:
a third configuration, wherein the first inlet and the second inlet are releasably coupled to the first outlet and the second outlet, respectively, and wherein the first channel and the pipe are mutually spaced apart by a second spacing.

The first channel and the pipe are mutually spaced apart by the second spacing in the third configuration. It should be understood that the first spacing and the second spacing are different. In other words, spacing between the first channel and the pipe may be adjusted (i.e. varied) for example according to relative positions of the pipe and the surface, in use. In this way, installation of the slot drain is facilitated since a second angle of inclination of the slot drain may be adjusted after installation of the pipe, so as to correspond with the surface. In one example, the first outlet is slidably received in the first inlet and the second outlet is slidably received in the second inlet. In this way, the first inlet and the second inlet may be releasably coupled directly to the first outlet and to the second outlet, respectively, leakage of the water is reduced and a spacing between the third channel and the pipe may be adjusted, by moving, for example translating, the third channel relative to the pipe.

The first channel comprises the set of spacers, including the first spacer and the second spacer, arranged to space apart the first channel side wall and the second channel side wall and to releasably couple the first channel side wall and the second channel side wall. In this way, the third channel may be strengthened, thereby better resisting loadings, for example lateral loadings such as due to soil pressure. Furthermore, the first channel side wall and the second channel side wall may be separate parts, releasably coupled together by the set of spacers. In this way, fabrication and/or assembly of the third channel may be improved. In one example, the first channel side wall and the second channel side wall are separate parts, releasably coupled together by the set of spacers. In one example, the first spacer and/or the second spacer comprises a mechanical fastener, for example a threaded fastener such as a screw or a bolt, and/or a non-threaded fastener such as a hook, a clip or a toggle fastener.

In one example, the first spacer and/or the second spacer comprise a first rib and/or a second rib, respectively, arranged transversely to the first channel side wall, the second channel side wall and/or the third channel side wall. For example, the first rib may be formed from a sheet material. In this way, a strength of the third channel may be further increased. Furthermore, such ribs may allow the first side wall, the second side wall and/or the third side wall to be formed from a sheet material provided on a coil, since such ribs may straighten these respective side walls during assembly of the third channel.

In one example, the first spacer and/or the second spacer provide a fourth channel side wall and/or a fifth channel side wall, mutually opposed and spaced apart, respectively. In other words, the first spacer and/or the second spacer may also provide end walls for the first channel. Additional spacers, for example third, fourth or fifth spacers, may be arranged, for example equidistantly, between the first spacer and the second spacer.

The first spacer is arranged to releasably couple with the first channel side wall and/or with the second channel side wall. In other words, the first spacer releasably couples the first channel side wall to the second channel side wall and the first spacer is itself releasably coupled to the first channel side wall and/or with the second channel side wall. In this way, by releasably coupling the first spacer to the first channel side wall and to the second channel side wall, the first channel side wall may be releasably coupled to the second channel side wall via the first spacer. The second spacer may be arranged similarly to the first spacer. In this way, assembly of the channel may be facilitated.

The first spacer comprises the first set of male coupling members and the second set of male coupling members;
wherein the first channel side wall comprises the first set of female coupling members, corresponding with the first set of male coupling members; and
wherein the second channel side wall comprises the second set of female coupling members, corresponding with the second set of male coupling members.

In this way, the first set of male coupling members and/or the second set of male coupling members may be releasably coupled to the first set of female coupling members and/or to the second set of female coupling members, respectively. In one example, the first set of male coupling members and/or the second set of male coupling members are integrally formed with the first spacer. In one example, the first set of female coupling members and/or to the second set of female coupling members are integrally formed with first channel side wall and/or the second channel side wall, respectively. The second spacer may be arranged similarly.

In one example, a male coupling member of the first set of male coupling members comprises a hook and a corresponding female coupling member of the first set of female coupling members is provided by an aperture, for example an elongated aperture or a slot, in the first channel side wall. In this way, the hook may be inserted into the aperture and arranged, for example by sliding, whereby the hook engages with an inner surface and/or an outer surface of the first channel side wall, thereby facilitating assembly of the third channel. In one example, the first set of male coupling members comprises two hooks and the first set of female coupling members comprises two corresponding apertures. The second set of male coupling members and/or the second set of female coupling members may be arranged similarly, mutatis mutandis. The second spacer may be arranged similarly. In this way, releasable coupling may be provided without using threaded fasteners, thereby facilitating assembly and/or reducing cost.

In one example, the set of spacers, including the first spacer and the second spacer, is arranged to secure the third channel side wall between the first channel side wall and the second channel side wall. That is, by coupling the first channel side wall and the second channel side wall together via the set of spacers, the third channel side wall is releasably coupled to the first channel side wall and the second channel side wall. In one example, the first channel side wall, the second channel side wall and the third channel side wall are separate parts, releasably coupled together by the set of spacers. For example, the third channel side wall may be held in compression between the first channel side wall and the second channel side wall by the set of spacers, which are conversely held in tension therebetween.

In one example, the first channel comprises a set of sealing members, including a first sealing member and a second sealing member, arranged between the first channel side wall and the third channel side wall and between the second channel side wall and the third channel side wall, respectively. In this way, leakage of water between the first channel side wall and the third channel side wall and between the second channel side wall and the third channel side wall, may be reduced. In one example, the first sealing member and/or the second sealing member comprises and/or is a gasket, for example a tape comprising an elastomeric material, and/or layer of a sealant, for example a silicone sealant such as a silicone RTV sealant.

In one example, the third channel side wall comprises a first region and a second region, mutually adjacent and inclined, between the first outlet and the second outlet. That is, the third channel side wall may be angled, for example bent, whereby in use, water flows towards the first outlet and/or the second outlet. By increasing water flowrate through the third channel (i.e. drainage of the third channel into the pipe), problems due, for example, to accumulation of water in the third channel may be reduced. Furthermore, debris received through the slot may be transported more readily into the pipe, thereby preventing blockage of the third channel and/or the outlets and/or the inlets.

In one example, the first channel comprises a set of grating members, including a first grating member, arranged proximal the open side and between the first channel side wall and the second channel side wall, mutually spaced apart therefrom. In this way, admittance into the third channel of foreign objects and/or debris may be reduced. A maximum grating spacing may be mandated according to installation requirements, for example. In one example, first grating member comprises a bar and the first spacer and the second spacer include respective apertures to secure the bar therein.

In one example, the slot drain section comprises a set of adjustable feet. In one example, the pipe comprises a set of adjustable feet, for example attached directly and/or indirectly thereto. In this way, an angle of inclination of the slot drain and/or the pipe may be adjusted and/or different excavated levels in an excavation provided for the slot drain accommodated. In one example, the set of adjustable feet are included on a coupling member (for example a releasable coupling member such as a circumferential band or strap or clip e.g. jubilee type clip) arrangeable to couple the pipe to an adjacent pipe. In this way, a number of parts may be reduced, thereby reducing cost and/or complexity of installation.

In one example, the slot drain section comprises a second channel. The second channel may be as described above with respect to the first channel. In one example, the first channel and the second channel are adjacent and mutually coupled, for example using mechanical fasteners. In one example, the first channel and the second channel are mutually spaced axially. In this way, channels may be arranged discontinuously, for example to span a pavement therebetween or at an intersection, while the pipe may be continuous thereunder.

In one example, the slot drain, for example the channel and/or the pipe, comprises, at least in part, a metal, for example an alloy such as a steel, stainless steel or an aluminium alloy. In one example, the slot drain, for example the channel and/or the pipe, comprises and/is formed from a sheet or a plate of such a metal. In one example, the channel and/or the pipe is formed, for example fabricated and/or assembled, from sheet steel, such as uncoated or coated hot-rolled sheet or strip, for example according to BS EN 10051 or equivalent, from continuously hot-dip coated steel sheet or strip, for example according to BS EN 10143 or equivalent, having a surface coating of zinc in a range from 50 gm⁻² to 600 gm⁻², preferably 100 gm⁻² to 500 gm⁻², more preferably 200 gm⁻² to 400 gm⁻² for example 305 gm⁻² on at least one, preferably both, surfaces and/or from uncoated or electrolytically coated cold rolled sheet and strip, for example according to BS EN 10131. The surface coating may be applied before and/or after forming, for example. In one example, the steel comprises a secondary coating, for example MonoGuard Bitumen (also known as MonoGuard High Build Coal Tar (HBCT), being a two-component, polyamide cured, coal tar epoxy coating), Trenchcoat polymer or epoxy, such as a fusion-bonded epoxy (FBE). In this way, tolerance to aggressive environments is improved. A Trenchcoat polymer coating (also known as Trenchcoat protective film) is protective polyethylene and acrylic acid copolymer coating, conforming to AST A742 and/or AASHTO M 246. Typically, the Trenchcoat polymer coating has a thickness of at least 250 µm. The Trenchcoat polymer coating may be applied to at least one, preferably both, surfaces of the steel, for example over a galvanized coating, before and/or after forming, for example. In one example, the steel has a thickness in a range from 1 mm to 6 mm, preferably 1.5 mm to 4.5 mm.

In one example, the channel is formed, at least in part, by providing, for example sawing, punching, shearing, cutting, laser cutting or plasma cutting, a blank corresponding with the first channel side wall, the second channel side wall and/or the third channel side wall from a sheet of such a steel, and bending the blank, thereby providing the first channel side wall, the second channel side wall and/or the third channel side wall. In one example, the channel is formed, at least in part, by providing, for example sawing, punching, shearing, cutting, laser cutting or plasma cutting, blanks corresponding with the first channel side wall, the second channel side wall and/or the third channel side wall from a sheet of such a steel, and assembling the blanks by coupling the blanks using a set spacers including a first spacer and a second spacer, thereby providing the first channel side wall, the second channel side wall and/or the third channel side wall. In one example, the set of spacers including the first spacer and the second spacer are formed at least in part, by providing, for example sawing, punching, shearing, cutting, laser cutting or plasma cutting, blanks corresponding with the first spacer and the second spacer. In other words, the channel may be provided as a 'flat-pack' for assembly, for example on site. In this way, storage and/or transportation may be facilitated. Furthermore, releasable coupling provided by the set of spacers may facilitate assembly and/or reduce cost.

In one example, the pipe is formed from helically wound and welded pre-galvanised steel coil (also known as helibore pipe), such as continuously hot-dip coated steel sheet or strip, for example according to BS EN 10143 or equivalent, having a surface coating of zinc in a range from 50 gm⁻² to 600 gm⁻², preferably 100 gm⁻² to 500 gm⁻², more preferably 200 gm⁻² to 400 gm⁻² for example 305 gm⁻² on at least one, preferably both, surfaces. In one example, the steel comprises a secondary coating, for example MonoGuard Bitumen (also known as MonoGuard High Build Coal Tar (HBCT), being a two-component, polyamide cured, coal tar epoxy coating), Trenchcoat polymer or epoxy, such as a fusion-bonded epoxy (FBE). In this way, tolerance to aggressive environments is improved. A Trenchcoat polymer coating (also known as Trenchcoat protective film) is protective polyethylene and acrylic acid copolymer coating, conforming to AST A 742 and/or AASHTO M-246. Typically, the Trenchcoat polymer coating has a thickness of at least 250 µm. The Trenchcoat polymer coating may be applied to at least one, preferably both, surfaces of the pipe, for example over a galvanized coating. In one example, the pipe conforms with The Highways Agency Standard BD12. In one example, the pipe has a wall thickness in a range from 1 mm to 6 mm, preferably 1.5 mm to 4.5 mm. In this way, the pipe is relatively lightweight, facilitating installation, while resistant to highway loadings and having a relatively long expected life, for example at least 60 years or at least 120 years.

In one example, the pipe comprises and/or is a perforated pipe, having perforations therethrough. In this way, the pipe may behave as a soak away, whereby at least a part of the water accumulated therein may soak into the surrounding ground.

In one example, the slot drain, for example the channel and/or the pipe, comprises, at least in part, comprises a polymeric composition comprising a thermoplastic polymer.

Polymeric compositions comprising thermoplastics may be readily formed, for example by extrusion, moulding or injection moulding, to provide the described channel and/or the pipe. Such polymeric compositions may have appropriate mechanical properties suitable for subterranean installations, including loads as described above. Such polymeric compositions may have appropriate chemical properties suitable for resistance to the environment. For example, such polymeric compositions may be resistant to chemicals, such as oils and/or leachates. In addition, such polymeric compositions may be stabilised for resistance to UV light and/or ozone, for example.

In one example, the thermoplastic polymer is selected from a group consisting of poly(methyl methacrylate) (PMMA), acrylonitrile butadiene styrene (ABS), aliphatic or semi-aromatic polyamides, polylactic acid (polylactide) (PLA), polybenzimidazole (PBI), polycarbonate (PC), polyether sulfone (PES), polyetherimide, polyethylene (PE), polypropylene (PP), polymethylpentene (PMP) and polybutene-1 (PB-1), polystyrene (PS) and polyvinyl chloride (PVC). A preferred thermoplastic polymer is polypropylene (PP) or polyethylene (PE).

In one example, the thermoplastic polymer is a thermoplastic polyolefin. The thermoplastic polyolefin may be selected from a group consisting of: polyethylene (PE), polypropylene (PP), polymethylpentene (PMP) and polybutene-1 (PB-1). A preferred thermoplastic polyolefin is polyethylene (PE). In one example, the polyethylene has a density range of 0.880-0.940 g/cm³. In one example, the polyethylene has a density >0.940 g/cm³. In one example, the polyethylene is selected from a group consisting of high-density polyethylene (HDPE), medium-density polyethylene (MDPE), linear low-density polyethylene (LLDPE), low-density polyethylene (LDPE) and very-low-density polyethylene (VLDPE). In one example, the polyethylene has a crystallinity of more than 30%, more than 35%, more than 40%, more than 45%, more than 50%, more than 55%, more than 60%, more than 65%, more than 70%, more than 75%, more than 80%, more than 85%, more than 90%. In one example, the PE is copolymerised with, for example, but-1-ene or hex-1-ene.

In one example, the polymeric composition comprises an additive, such as a filler and/or a colourant.

In one example, the slot drain, for example the channel and/or the pipe, comprises, at least in part, comprises a composite, for example glass-reinforced plastic (GRP) or similar.

According to the second aspect, there is provided a slot drain comprising a slot drain section according to the first aspect, a first pipe end wall, a second pipe end wall and a flow attenuator;
wherein the flow attenuator is arranged to attenuate, in use, a flowrate of water out of the pipe.

In this way, water received at a relatively higher flowrate via the slot may be accumulated in the pipe and discharged therefrom via the flow attenuator at the relatively lower flowrate, thereby reducing loading on a drainage system.

It should be understood that the first pipe end wall and the second pipe end wall are arranged to close the ends of the pipe, thereby providing a tank (also known as an accumulator tank) to accumulate water received via the slot. For example, the first pipe end wall and/or the second pipe end wall may comprise and/or be bulkheads or dished ends.

In one example, the flow attenuator (also known as a flow regulator) comprises and/or is an orifice plate, a penstock, a throttle pipe or a vortex regulator. Vortex regulators, for example cyclone or centrifugal regulators, are preferred, being self-cleaning and having no moving parts, thereby reducing maintenance. In one example, the flow attenuator is arranged to attenuate the flowrate in a range from 1 ls⁻¹ to 1000 ls⁻¹, preferably in a range from 10 ls⁻¹ to 500 ls⁻¹. In one example, the flow attenuator is adjustable, arrangeable to attenuate the flowrate in a range from 1 ls⁻¹ to 1000 ls⁻¹, preferably in a range from 10 ls⁻¹ to 500 ls⁻¹.

As described above, since the slot drain section is arrangeable in the first configuration, in which the first channel and the pipe are separate (i.e. mutually uncoupled), installation of the slot drain section is facilitated. Hence, the pipe is positioned, for example according to a desired gradient of the pipe and/or separately from a desired gradient of the first channel, in the excavation, wherein the first inlet and the second inlet are positioned uppermost. Subsequently, the excavation is backfilled, in part, (i.e. a first backfilling step), for example with aggregate and/or soil, wherein the first inlet and the second inlet remain exposed. So as to prevent debris, for example with aggregate and/or soil, entering the first inlet and/or the second inlet, caps or closures may be provided for the first inlet and/or the second inlet, respectively. Further, in this way, damage to the first inlet and/or the second inlet may be reduced, for example during the first backfilling step. Since the first channel is not coupled to the pipe during this backfilling, damage to the first channel is avoided. Further, this backfiling may be completed sooner, reducing a hazard due to the unfilled excavation. Later, the first inlet and the second outlet may be coupled to the first outlet and the second outlet, respectively, before backfilling, for example with aggregate, concrete, asphalt and/or paving, in part the remainder of the excavation (i.e. a second backfilling step). Thus, the slot drain in the first configuration facilitates both storage and/or transportation as well as installation.

According to a third aspect, there is provided a method of assembling a channel for a slot drain section according to the first aspect, wherein the method comprises:
coupling, with the first spacer and the second spacer, the first channel side wall and the second channel side wall.

In other words, the channel may be provided as a 'flat-pack' for assembly, for example on site. In this way, storage and/or transportation may be facilitated. Furthermore, releasable coupling provided by the set of spacers may facilitate assembly and/or reduce cost.

The set of spacers, including the first spacer and the second spacer, may be as described with respect to the first aspect. The first channel side wall, the second channel side wall and/or the third channel side wall may be as described with respect to the first aspect.

The method may include any of the steps described herein.

According to a fourth aspect, there is provided a kit of parts for a slot drain section comprising a set of channels, including a first channel, and a pipe, the kit comprising:
a first channel side wall, a second channel side wall, a third channel side wall and a set of spacers, including a first spacer and a second spacer, for spacing apart the first channel side wall and the second channel side wall, for releasably coupling the first channel side wall and the second channel side wall and for releasably coupling with the first channel side wall and with the second channel side wall;
wherein the first spacer comprises a first set of male coupling members and a second set of male coupling members;
wherein the first channel side wall comprises a first set of female coupling members, corresponding with the first set of male coupling members; and
wherein the second channel side wall comprises a second set of female coupling members, corresponding with the second set of male coupling members;
wherein the third channel side wall comprises a set of outlets, including a first outlet and a second outlet, mutually spaced apart;
wherein the pipe comprises a pipe side wall and a set of inlets, including a first inlet and a second inlet, mutually spaced apart and provided through the pipe side wall.

The slot drain section, the set of channels, the first channel, the pipe, the first channel side wall, the second channel side wall, the third channel side wall, the set of spacers, the first spacer, the second spacer, the set of outlets, the first outlet, the second outlet, the pipe side wall, the set of inlets, the first inlet and/or the second inlet may be as described with respect to the first aspect.

### Definitions

Throughout this specification, the term "comprising" or "comprises" means including the component(s), unit(s), module(s), feature(s) or integers) specified but not to the exclusion of the presence of other components, units, modules, features or integers.

The term "consisting of" or "consists of" means including the component(s), unit(s), module(s), feature(s) or integer(s) specified but excluding other components, units, modules, features or integers.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### Brief description of the drawings

For a better understanding of the invention, and to show how exemplary embodiments of the same may be brought into effect, reference will be made, by way of example only, to the accompanying diagrammatic Figures, in which:
Figure 1 schematically depicts a side elevation of a slot drain section according to an exemplary embodiment, arranged in a first configuration;
Figure 2 schematically depicts a side elevation of the slot drain section of Figure 1, arranged in a second configuration;
Figure 3 schematically depicts a side elevation of a slot drain section according to an exemplary embodiment, arranged in a first configuration;
Figure 4 schematically depicts a side elevation of the slot drain section of Figure 3, arranged in a second configuration;
Figure 5 schematically depicts a side elevation of a slot drain section according to an exemplary embodiment, arranged in a first configuration;
Figure 6 schematically depicts a side elevation of the slot drain section of Figure 5, arranged in a second configuration;
Figure 7 schematically depicts a side elevation of a slot drain according to an exemplary embodiment, arranged in a second configuration;
Figure 8 schematically depicts an end elevation of the slot drain of Figure 7, arranged in the second configuration;
Figure 9 schematically depicts an isometric view of a slot drain according to an exemplary embodiment, arranged in a second configuration;
Figure 10 schematically depicts a plan of a channel for the slot drain section of Figure 1, in more detail;
Figure 11 schematically depicts an end elevation of the channel of Figure 10, in more detail;
Figure 12 schematically depicts a side elevation of a first channel side wall of the channel of Figure 10, in more detail;
Figure 13 schematically depicts a side elevation of a grill of the channel of Figure 10, in more detail;
Figure 14A schematically depicts a plan view of a blank of a first spacer of the channel of Figure 10 and Figure 14B schematically depicts a side elevation of the first spacer of the channel of Figure 10, in more detail;
Figure 15 schematically depicts an end elevation of a third spacer of the channel of Figure 10, in more detail;
Figure 16A schematically depicts a plan view of a blank of a third channel side wall of the channel of Figure 10 and Figure 16B schematically depicts a side elevation of the third channel side wall of the channel of Figure 10, in more detail;
Figure 17 schematically depicts a plan view of a sheet including blanks of the channel of Figure 10;
Figure 18 schematically depicts a method of installing a slot drain section according to an exemplary embodiment; and
Figure 19 schematically depicts a method of assembling a channel for a slot drain section according to an exemplary embodiment; and
Figure 20 schematically depicts a method of manufacturing a pipe for a slot drain section according to an exemplary embodiment.

### Detailed Description of the Drawings

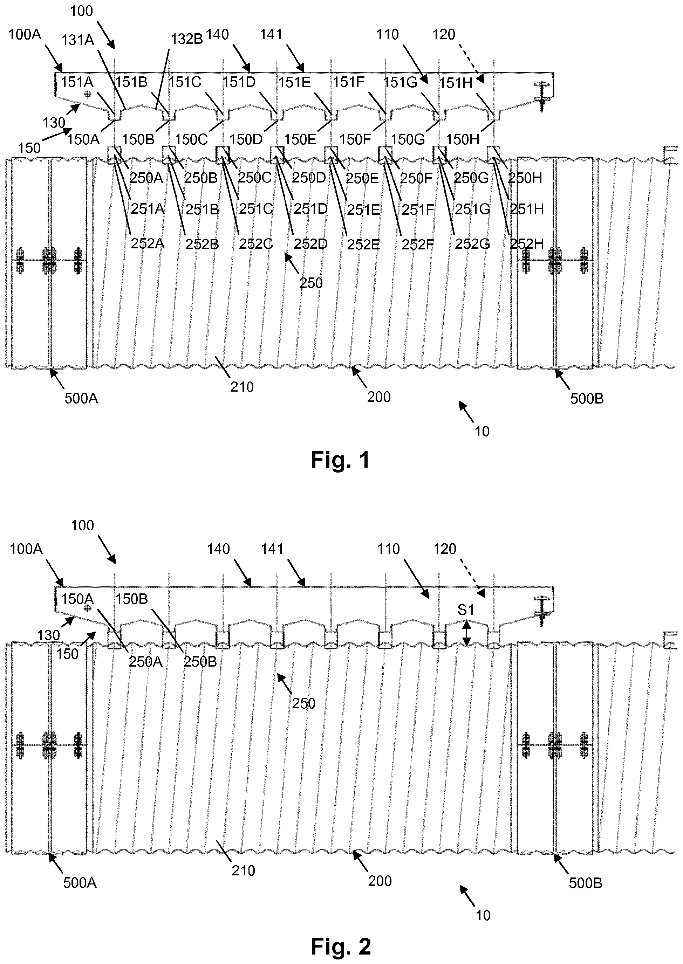

Figure 1 schematically depicts a side elevation of a slot drain section 10 according to an exemplary embodiment, arranged in a first configuration.

Figure 2 schematically depicts a side elevation of the slot drain section 10, arranged in a second configuration.

The slot drain section 10 comprises a set of channels 100, including a first channel 100A, and a pipe 200. The first channel 100A comprises an open side 140 arranged to provide a slot 141 to receive water therethrough, a first channel side wall 110 and a second channel side wall 120, mutually opposed and spaced apart, and a third channel side wall 130, opposed to the open side 140, extending between the first channel side wall 110 and the second channel side wall 120. The third channel side wall 130 comprises a set of outlets 150, including a first outlet 150A and a second outlet 150B, mutually spaced apart. The pipe 200 comprises a pipe side wall 210 and a set of inlets 250, including a first inlet 250A and a second inlet 250B, mutually spaced apart and provided through the pipe side wall 210. The slot drain section 10 is arrangeable in the first configuration and in the second configuration. In the first configuration, the first inlet 250A and the second inlet 250B are uncoupled from the first outlet 150A and from the second outlet 150B, respectively. In the second configuration, the first inlet 250A and the second inlet 250B are releasably coupled to the first outlet 150A and to the second outlet 150B, respectively, and wherein the first channel 100A and the pipe 200 are mutually spaced apart by a first spacing S1.

Since the slot drain section 10 is arrangeable in the first configuration, in which the first channel 100A and the pipe 200 are separate (i.e. mutually uncoupled), storage and/or transportation of the slot drain section 10 is facilitated, as described above. Furthermore, since the slot drain section 10 is arrangeable in the first configuration, in which the first channel 100A and the pipe 200 are separate (i.e. mutually uncoupled), installation of the slot drain section 10 is facilitated, as described above. Thus, the slot drain in the first configuration facilitates both storage and/or transportation as well as installation.

In the second configuration (i.e. an in use or installed configuration), the slot 141 provides rapid clearance of surface water. The water received through the slot 141 flows through the first channel 100A, for example over the third channel side wall 130, into the pipe 200 via the first outlet 150A and/or the second outlet 150B and the first inlet 250A and/or the second inlet 250B, respectively. The pipe 200 provides at least a part of an accumulator and thus the water is accumulated in the pipe 200 and may be discharged, for example downstream of the pipe 200, at an attenuated flowrate, via a flow attenuator, into a drainage system. Thus, the slot drain, in the second configuration, synergistically integrates three functions: the slot 141 for rapid clearance of the surface water, transport of the water in the pipe 200 and accumulation of the water in the pipe 200, discharge of which into the drainage system is attenuated by the flow attenuator.

The slot drain section 10 has a length of 3 m. Other lengths may be provided, as described previously. Sizes of the first channel 100A and of the pipe 200 are described below.

The slot drain section 10 comprises the set of channels 100, including the first channel 100A. In this example, the set of channels 100 comprises 1 channel (i.e. the first channel 100A). In this example, a length of the first channel 100A is the same as a length of the pipe 200, as described below.

Generally, the first channel 100A is elongate, having parallel sides (i.e. the first channel side wall 110 and the second channel side wall 120) and a non-planar base (i.e. the third channel side wall 130).

The first channel 100A comprises the open side 140 arranged to provide a slot 141 to receive water therethrough. It should be understood that the slot 141 thus provides an inlet into the first channel 100A for the water. Generally, an open area of the slot 141 should be maximised.

However, grills, as described below, reduce the open area below 100%. In this example, the slot 141 has an open area in a range from 50% to 100%, preferably in a range from 60% to 90%, more preferably in a range from 70% to 80%, as a percentage of the area between the first channel side wall 110 and the second channel side wall 120. In this example, the slot 141 has a rectangular shape, having a length of about 3000 mm and a width of about 25 mm.

The first channel 100A comprises the first channel side wall 110 and the second channel side wall 120, mutually opposed and spaced apart. In use, the first channel side wall 110 and the second channel side wall 120 are generally oriented vertically. In this example, the first channel side wall 110 and the second channel side wall 120 are interchangeable or transposable. In this example, the first channel side wall 110 and the second channel side wall 120 are mutually substantially parallel and/or parallel. In this example, respective free edges of the first channel side wall 110 and the second channel side wall 120 define opposed sides of the slot 141. In this example, respective free edges of the first channel side wall 110 and the second channel side wall 120 are substantially parallel or parallel. In this example, a spacing between the first channel side wall 110 and the second channel side wall 120 is 50 mm. In this example, a spacing between the first channel side wall 110 and the second channel side wall 120 is substantially constant.

The first channel 100A comprises the third channel side wall 130, opposed to the open side 140, extending between the first channel side wall 110 and the second channel side wall 120. In use, the third channel side wall 130 is generally oriented horizontally. It should be understood that the third channel side wall 130 extends completely (i.e. spans) between the first channel side wall 110 and the second channel side wall 120, such that there are no passageways between the first channel side wall 110 and the third channel side wall 130 or between the second channel side wall 120 and the third channel side wall 130, through which water would otherwise leak. The third channel side wall 130 comprises the set of outlets 150, including the first outlet 150A and the second outlet 150B, mutually spaced apart. In this example, the set of outlets 150 comprises 8 outlets 150A - 150H (i.e. N = 8). Other numbers of outlets may be provided. In this example, the first outlet 150A and the second outlet 150B are adjacent outlets. In this example, the spacing between centres of the first outlet 150A and the second outlet 150B is 280 mm.

In this example, a cross-sectional shape of the first channel 100A is substantially U-shaped, having substantially parallel or parallel planar (i.e. flat) sides (i.e. the first channel side wall 110 and the second channel side wall 120) and a non-planar base (i.e. the third channel side wall 130).

In this example, the third channel side wall 130 is transverse to the first channel side wall 110 and/or the second channel side wall 120. In this example, the first channel side wall 110, the second channel side wall 120 and the third channel side wall 130 are planar. In this example, the first channel side wall 110 and the second channel side wall 120 are coplanar (i.e. parallel) and the third channel sidewall is orthogonal to the first channel side wall 110 and the second channel side wall 120.

Generally, the first channel 100A is elongate, having parallel sides (i.e. the first channel side wall 110 and the second channel side wall 120) and a non-planar base (i.e. the third channel side wall 130).

The slot drain section 10 comprises the pipe 200 (i.e. a tube). The pipe side wall 210 defines, at least in part, a volume within the pipe 200 for accumulating water. In this example, the pipe 200 has a circular cross-section, having a diameter of 900 mm. Other diameters, for example 1400 mm and/or 1800 mm, may be provided. In this example, a length of the pipe 200 is 3 m. In this way, the pipe 200 may be readily transported on a standard flatbed lorry, for example.

The pipe 200 comprises the pipe side wall 210 and the set of inlets 250, including the first inlet 250A and the second inlet 250B, mutually spaced apart and provided through the pipe side wall 210. That is, the first inlet 250A and the second inlet 250B, provided through the pipe side wall 210, are separated by at least a portion of the pipe side wall 210. That is, the first inlet 250A and the second inlet 250B are discrete (i.e. mutually isolated in the pipe side wall 210). In this way, a structural integrity of the pipe 200 is improved compared, for example, with an elongated perforation through the pipe side wall 210, such as along substantially a complete length of the pipe 200. In this example, the first inlet 250A and the second inlet 250B are mutually spaced apart, for example axially with respect to the pipe 200, by two cross-sectional diameters, of the first inlet 250A and/or the second inlet 250B. In this example, the first inlet 250A and the second inlet 250B are aligned axially (i.e. longitudinally) with respect to the pipe 200. In this example, all the inlets of the set of inlets 250 are aligned axially with respect to the pipe 200. In this example, a total axial length of the inlets of the set of inlets 250, as a proportion of the length of the pipe 200, is about 25 %.

In this example, the set of inlets 250 comprises 8 inlets 250A - 250H (i.e. P = 8). In this example, the first inlet 250A and the second inlet 250B are adjacent inlets. In this example, the spacing between centres of the first inlet 250A and the second inlet 250B is 280 mm. In this example, the first inlet 250A and the second inlet 250B correspond with the first outlet 150A and the second outlet 150B, respectively. Particularly, spacings of the first inlet 250A and the second inlet 250B correspond with the first outlet 150A and the second outlet 150B (i.e. are the same). Further, sizings and/or cross-sectional shapes of the first inlet 250A and the second inlet 250B correspond with the first outlet 150A and the second outlet 150B, for example, the first outlet 150A may be received in the first inlet 250A or vice versa and the second outlet 150B may be received in the second inlet 250B or vice versa. In this way, the first inlet 250A and the second inlet 250B may be releasably coupled directly to the first outlet 150A and to the second outlet 150B, respectively. In this example, the first outlet 150A is received in the first inlet 250A and the second outlet 150B is received in the second inlet 250B. In this way, the first inlet 250A and the second inlet 250B may be releasably coupled directly to the first outlet 150A and to the second outlet 150B, respectively, and leakage of the water is reduced.

In this example, the first outlet 150A and the second outlet 150B comprise a first stub end 151A and a second stub end 151B, respectively and the first inlet 250A and the second inlet 250B comprise a first socket 251A and a second socket 251B, respectively. In this example, the first stub end 151A and the second stub end 151B have a round cross-section, and the first socket 251A and the second socket 251B have a round cross-section. The internal diameter of the first socket 251A and the second socket 251B corresponds with the external diameter of the first stub end 151A and the second stub end 151B. In this example, a first aperture 252A and a second aperture 252B are provided, for example by cutting or machining, in the pipe side wall 210 and the first socket 251A and the second socket 251B are attached to the pipe 200, by welding, surrounding the first aperture 252A and the second aperture 252B, respectively. Stub ends 151C to 151H are similarly provided for the outlets 150C to 150H, respectively. Sockets 251C to 251H and apertures 252C to 252H are similarly provided for the inlets 250C to 250H, respectively.

The first channel 100A and the pipe 200 are mutually spaced apart by the first spacing S1 in the second configuration.

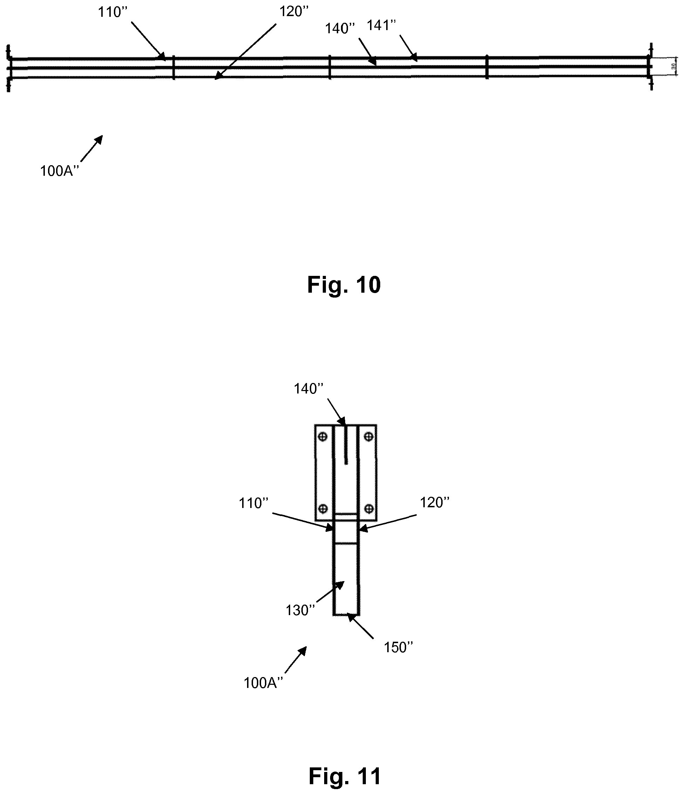

In this example, the first channel 100A comprises a set of spacers, including a first spacer and a second spacer, arranged to space apart the first channel side wall 110 and the second channel side wall 120 and to releasably couple the first channel side wall 110 and the second channel side wall 120, as described below with respect to Figures 10 to 17.

In this example, the first channel 100A comprises a set of sealing members, including a first sealing member and a second sealing member, arranged between the first channel side wall 110 and the third channel side wall 130 and between the second channel side wall 120 and the third channel side wall 130, respectively, as described below with respect to Figures 10 to 17.

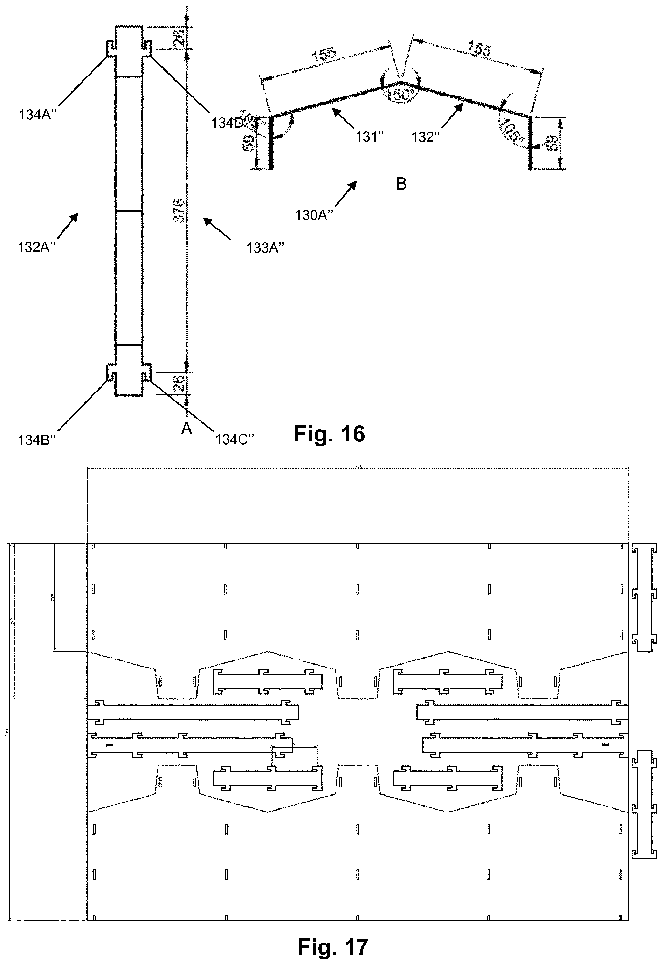

In this example, the third channel side wall 130 comprises a first region 131A and a second region 132B, mutually adjacent and inclined, between the first outlet 150A and the second outlet 150B, as described below with respect to Figures 16A and 16B.

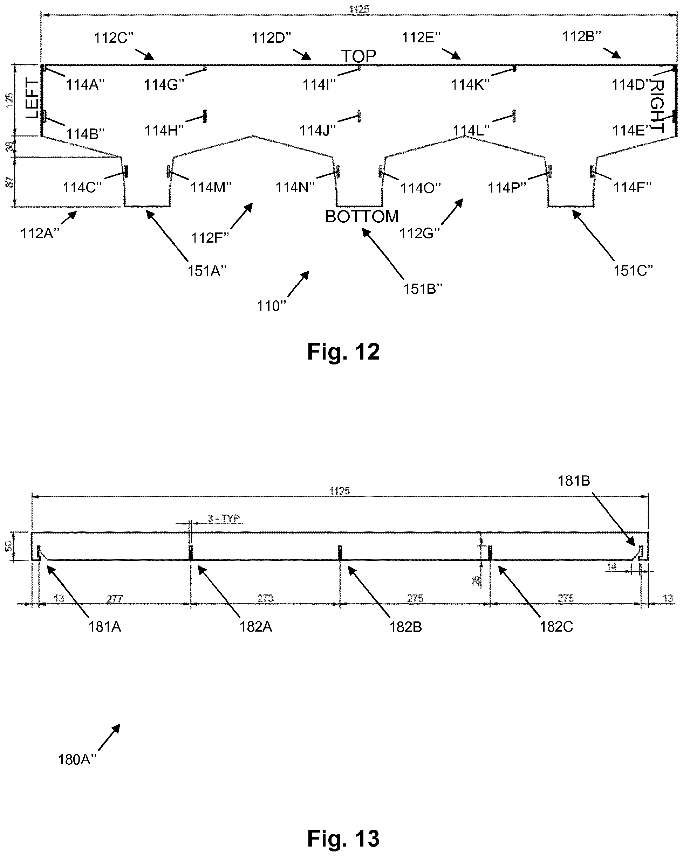

In this example, the first channel 100A comprises a set of grating members 180 (not shown), including a first grating member 180A (not shown), arranged proximal the open side 140 and between the first channel side wall 110 and the second channel side wall 120, mutually spaced apart therefrom, as described below with respect to Figure 13.

In this example, the first channel 100A is formed from uncoated hot-rolled sheet steel according to BS EN 10051, having a thickness of 2.5 mm, and subsequently coated by hot-dipping in zinc. Additionally and/or alternatively, the zinc coating may be provided before cutting during fabrication and/or after welding during fabrication. Additionally and/or alternatively, the first channel maybe formed from coated sheet steel, as described previously.

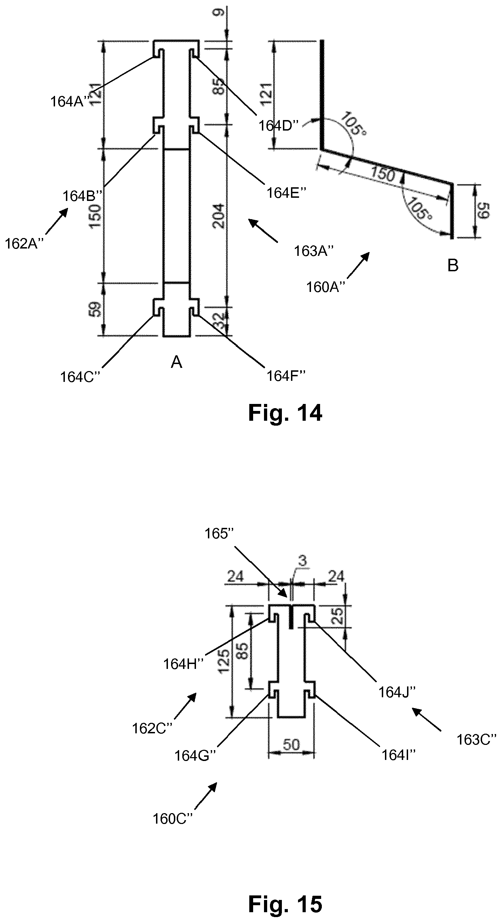

In this example, the first channel 100A is formed, at least in part, by plasma cutting blanks corresponding with the first channel side wall 110, the second channel side wall 120 and/or the third channel side wall 130 from a sheet of such a steel, and assembling the blanks by coupling the blanks using a set spacers including a first spacer and a second spacer, thereby providing the first channel side wall 110, the second channel side wall 120 and/or the third channel side wall 130, as described below with respect to Figures 10 to 17. In this example, the set of spacers including the first spacer and the second spacer are formed at least in part, by providing, for example sawing, punching, shearing, cutting laser cutting or plasma cutting, blanks corresponding with the first spacer and the second spacer, as described below with respect to Figures 14A and 14B. In other words, the channel 100A may be provided as a 'flat-pack' for assembly, for example on site. In this way, storage and/or transportation may be facilitated. Furthermore, releasable coupling provided by the set of spacers may facilitate assembly and/or reduce cost

In this example, the pipe 200 is formed from helically wound and welded pre-galvanised steel coil, according to BS EN 10143, having a surface coating of zinc of 305 gm⁻² on both surfaces. In this example, the pipe 200 has a wall thickness of 2.5 mm.

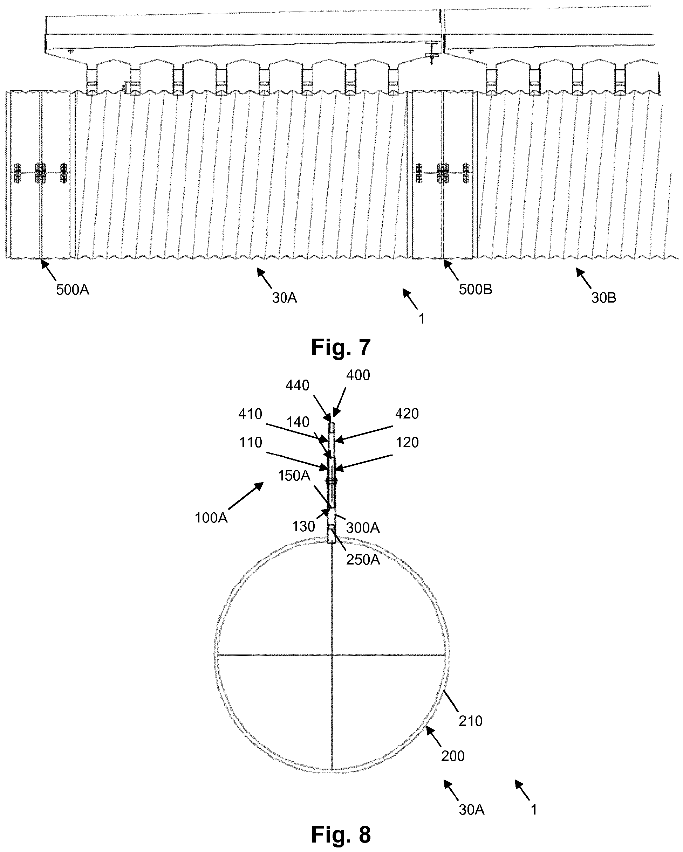

Circumferential bands 500A, 500B are arrangeable to couple respective pipes of adjacent slot drain sections 10, as described below with respect to Figures 7 and 8.

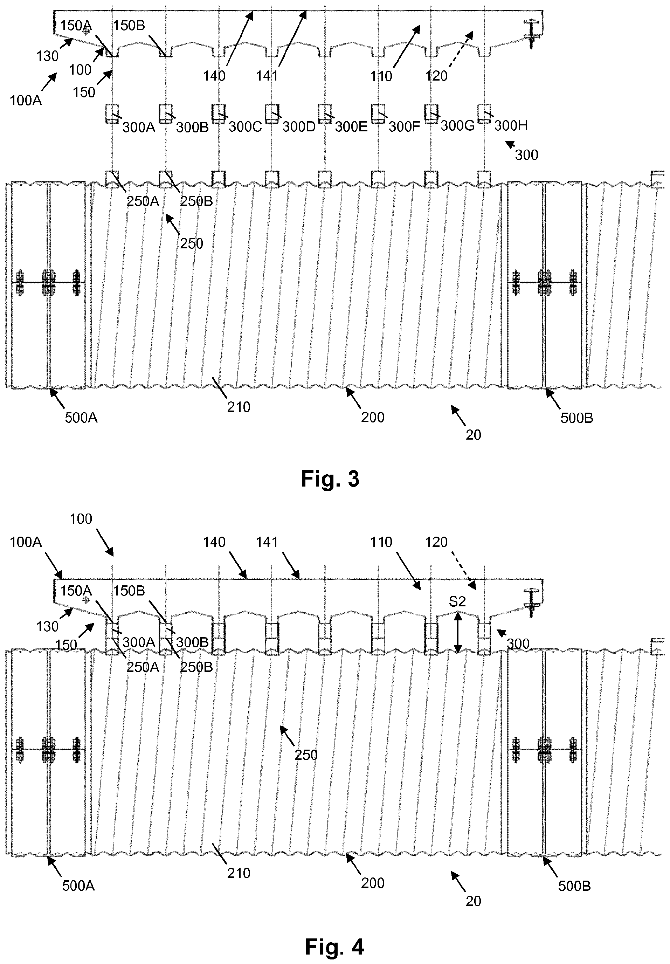

Figure 3 schematically depicts a side elevation of a slot drain section 20 according to an exemplary embodiment, arranged in a first configuration.

Figure 4 schematically depicts a side elevation of the slot drain section 20 of Figure 3, arranged in a second configuration.

Generally, the slot drain section 20 is as described above with respect to the slot drain section 10 and like features are not described, for brevity. The slot drain section 20 comprises the set of channels 100, including the first channel 100A, and the pipe 200, as described previously.

In this example, the slot drain section 20 comprises a set of conduits 300, including a first conduit 300A and a second conduit 300B, arrangeable to releasably couple the first inlet 250A and the second inlet 250B to the first outlet 150A and the second outlet 150B, respectively. In this way, a height of the first channel 100A may be reduced and/or a depth of installation of the pipe 200 may be increased, since the conduits fluidically couple the first channel 100A and the pipe 200. By reducing the height of the first channel 100A, material usage is reduced while deformation due to loadings, for example lateral loadings such as due to soil pressure, on the first side wall and the second side wall, for example, is reduced. In contrast, conduits having round or square cross-sectional shapes may better resist such soil pressure. Furthermore, lengths of the conduits may be adjusted according to specific installation requirements. For example, the conduits may be cut to desired lengths from stock lengths, thereby facilitating custom installation. Additionally and/or alternatively, conduits may be provided having different lengths and selected accordingly. Conduits 300C to 300H are provided similarly for coupling the outlets 150C to 150H and the inlets 250C to 250H, respectively.

In this example, the slot drain section 10 is arrangeable in:
a third configuration, wherein the first inlet 250A and the second inlet 250B are releasably coupled to the first outlet 150A and the second outlet 150B, respectively, and wherein the first channel 100A and the pipe 200 are mutually spaced apart by a second spacing S2.

The first channel 100A and the pipe 200 are mutually spaced apart by the second spacing S2 in the third configuration. It should be understood that the first spacing S1 and the second spacing S2 are different. In other words, spacing between the first channel 100A and the pipe 200 may be adjusted (i.e. varied) for example according to relative positions of the pipe 200 and the surface, in use. In this way, installation of the slot drain is facilitated since a second angle of inclination of the slot drain may be adjusted after installation of the pipe 200, so as to correspond with the surface. In this example, the first outlet 150A is slidably received in the first inlet 250A and the second outlet 150B is slidably received in the second inlet 250B. In this way, the first inlet 250A and the second inlet 250B may be releasably coupled directly to the first outlet 150A and to the second outlet 150B, respectively, leakage of the water is reduced and a spacing between the third channel and the pipe 200 may be adjusted, by moving, for example translating, the third channel relative to the pipe 200.

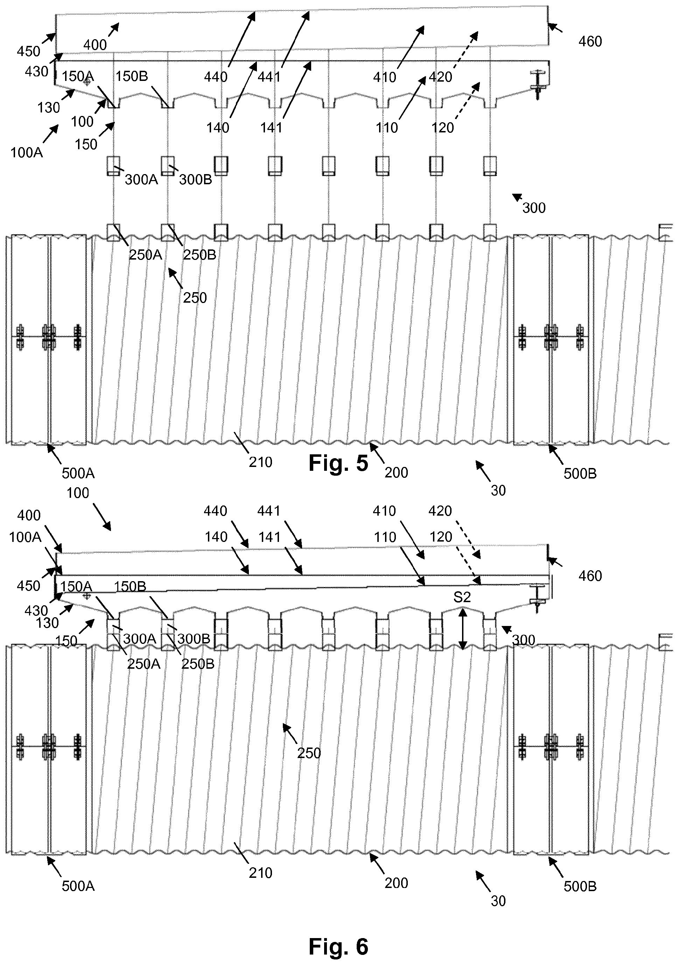

Figure 5 schematically depicts a side elevation of a slot drain section 30 according to an exemplary embodiment, arranged in a first configuration.

Figure 6 schematically depicts a side elevation of the slot drain section 30 of Figure 5, arranged in a second configuration.

Generally, the slot drain section 30 is as described above with respect to the slot drain section 20 and like features are not described, for brevity. The slot drain section 30 comprises the set of channels 100, including the first channel 100A, and the pipe 200, as described previously. The slot drain 30 comprises the set of conduits 300, including the first conduit 300A and the second conduit 300B.

In this example, the slot drain section 30 comprises a channel extension 400, arrangeable in the first channel 100A through the open side 140. Generally, the channel extension 400 is an elongate box, having parallel sides and opposed open ends, and fits inside the first channel 100A, extending away from the open side 140.

The channel extension 400 comprises a first open side 440, arranged to provide a slot 441 to receive water therethrough and an opposed second open 430, whereby water received through the slot 441 may pass through into the first channel 100A. The first open side 440 and the second open side 430 are defined by edges of four side walls, particularly opposed side walls 410 and 420 and opposed side walls 450 and 460, arranged transversely thereto at ends thereof. In this way, a position and/or an angle of inclination of the first open side 440 of the channel extension 400 may be adjusted to correspond with a surface of the ground, independently of a position and/or an angle of inclination of the open side 140 of the first channel section 100A.

Figure 7 schematically depicts a side elevation of a slot drain 1 according to an exemplary embodiment, arranged in a second configuration.

Figure 8 schematically depicts an end elevation of the slot drain 1 of Figure 7, arranged in the second configuration.

The slot drain 1 comprises a first slot drain section 30A, a second slot drain section 30B, a first pipe end wall (not shown), a second pipe end wall (not shown) and a flow attenuator (not shown). The flow attenuator is arranged to attenuate, in use, a flowrate of water out of the pipe 200A, 200B.

The first slot drain section 30A and the second slot drain section 30B are as described with respect to Figure 6 and Figure 7.

In this example, the slot drain 1 includes circumferential bands 500A, 500B arrangeable to couple respective pipes of adjacent slot drain sections 30. Particularly, the circumferential band 500A is arranged to couple the pipe 200A to the pipe 200B. The circumferential band 500A includes a gasket (not shown) to prevent leaks at the joint between the pipes 200A, 200B. The first channel 100A of the first slot drain section 30A and the first channel 100B of the second slot drain section 30B are not mutually coupled. Alternatively, the first channel 100A and the first channel 100B may be mutually coupled, for example using mechanical fasteners such as bolts and corresponding nuts and/or hooks and corresponding slots.

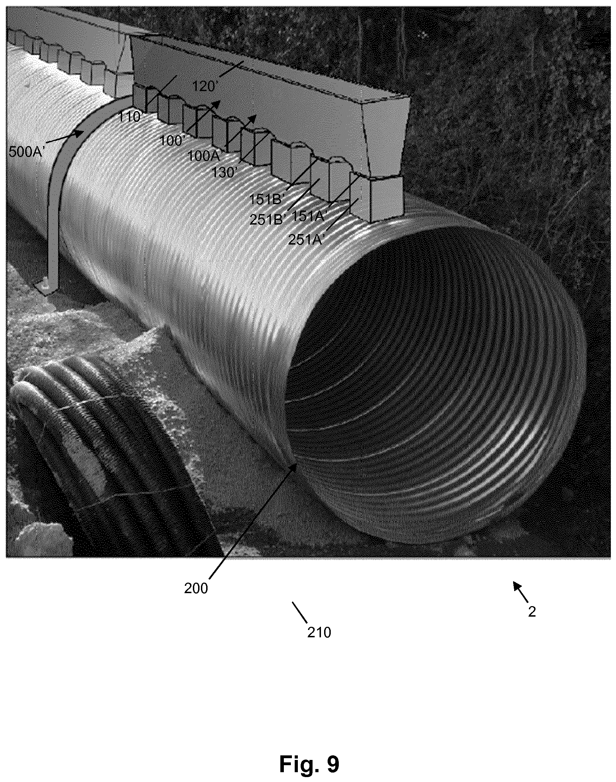

Figure 9 schematically depicts an isometric view of a slot drain 2 according to an exemplary embodiment, arranged in a second configuration.

Generally, the slot drain 2 is as described above with respect to the slot drain 1 and like features are not described, for brevity. The slot drain 2 comprises a set of channels 100', including the first channel 100A', and the pipe 200, as described previously. The slot drain 2 does not comprise a set of conduits. '

In this example, a cross-sectional shape of the first channel 100A' is substantially V-shaped, having planar tapering sides (i.e. the first channel side wall 110' and the second channel side wall 120') and a non-planar base (i.e. the third channel side wall 130').

In this example, the first stub end 151A and the second stub end 151B have a square cross-section, and the first socket 251A and the second socket 251B have a square cross-section. The internal side length of the first socket 251A and the second socket 251B corresponds with the external side length of the first stub end 151A and the second stub end 151B.

In this example, a set of adjustable feet are included on a coupling member arrangeable to couple the pipe 200 to an adjacent pipe 200.

Figure 10 schematically depicts a plan of a channel 100A" for the slot drain section of Figure 1, in more detail.

Figure 11 schematically depicts an end elevation of the channel 100A" of Figure 10, in more detail.

Generally, the channel 100A" is as described above with respect to the first channel 100A and like features are not described, for brevity.

The first channel 100A" comprises an open side 140" arranged to provide a slot 141" to receive water therethrough, a first channel side wall 110" and a second channel side wall 120", mutually opposed and spaced apart, and a third channel side wall 130", opposed to the open side 140", extending between the first channel side wall 110" and the second channel side wall 120". The third channel side wall 130" comprises a set of outlets 150", including a first outlet 150A" and a second outlet 150B", mutually spaced apart.

Generally, the first channel 100A" is elongate, having parallel sides (i.e. the first channel side wall 110" and the second channel side wall 120") and a non-planar base (i.e. the third channel side wall 130").

The first channel 100A" comprises the open side 140" arranged to provide a slot 141" to receive water therethrough. It should be understood that the slot 141" thus provides an inlet into the first channel 100A" for the water. Generally, an open area of the slot 141" should be maximised. However, grills, as described below, reduce the open area below 100%. In this example, the slot 141" has an open area in a range from 50% to 100%, preferably in a range from 60% to 90%, more preferably in a range from 70% to 80%, as a percentage of the area between the first channel side wall 110" and the second channel side wall 120". In this example, the slot 141" has a rectangular shape, having a length of about 1100 mm and a width of about 25 mm.

The first channel 100A" comprises the first channel side wall 110" and the second channel side wall 120", mutually opposed and spaced apart. In use, the first channel side wall 110" and the second channel side wall 120" are generally oriented vertically. In this example, the first channel side wall 110" and the second channel side wall 120" are interchangeable or transposable. In this example, the first channel side wall 110" and the second channel side wall 120" are mutually substantially parallel and/or parallel. In this example, respective free edges of the first channel side wall 110" and the second channel side wall 120" define opposed sides of the slot 141. In this example, respective free edges of the first channel side wall 110" and the second channel side wall 120" are substantially parallel or parallel. In this example, a spacing between the first channel side wall 110" and the second channel side wall 120" is 50 mm. In this example, a spacing between the first channel side wall 110" and the second channel side wall 120" is substantially constant.

The first channel 100A" comprises the third channel side wall 130", opposed to the open side 140", extending between the first channel side wall 110" and the second channel side wall 120. In use, the third channel side wall 130" is generally oriented horizontally. It should be understood that the third channel side wall 130" extends completely (i.e. spans) between the first channel side wall 110" and the second channel side wall 120", such that there are no passageways between the first channel side wall 110" and the third channel side wall 130" or between the second channel side wall 120" and the third channel side wall 130", through which water would otherwise leak. The third channel side wall 130" comprises the set of outlets 150", including the first outlet 150A" and the second outlet 150B", mutually spaced apart. In this example, the set of outlets 150" comprises 8 outlets 150A" - 150H. In this example, the first outlet 150A" and the second outlet 150B" are adjacent outlets. In this example, the spacing between the first outlet 150A" and the second outlet 150B" is 280" mm. In this example, a cross-sectional shape of the first channel 100A" is substantially U-shaped, having substantially parallel or parallel planar (i.e. flat) sides (i.e. the first channel side wall 110" and the second channel side wall 120) and a non-planar base (i.e. the third channel side wall 130).

In this example, the third channel side wall 130" is transverse to the first channel side wall 110" and/or the second channel side wall 120. In this example, the first channel side wall 110", the second channel side wall 120" and the third channel side wall 130" are planar. In this example, the first channel side wall 110" and the second channel side wall 120" are coplanar (i.e. parallel) and the third channel sidewall is orthogonal to the first channel side wall 110" and the second channel side wall 120".

In this example, the first channel 100A" comprises a set of sealing members, including a first sealing member and a second sealing member, arranged between the first channel side wall 110" and the third channel side wall 130" and between the second channel side wall 120" and the third channel side wall 130", respectively. In this way, leakage of water between the first channel side wall 110" and the third channel side wall 130" and between the second channel side wall 120" and the third channel side wall 130", may be reduced. In this example, the first sealing member and the second sealing member are tape comprising an elastomeric material.

In this example, the first channel 100A" comprises a set of spacers, including a first spacer 160A" and a second spacer, arranged to space apart the first channel side wall 110" and the second channel side wall 120" and to releasably couple the first channel side wall 110" and the second channel side wall 120", as described below with respect to Figures 10" to 17. In this way, the third channel may be strengthened, thereby better resisting loadings, for example lateral loadings such as due to soil pressure. Furthermore, the first channel side wall 110" and the second channel side wall 120" may be separate parts, releasably coupled together by the set of spacers. In this way, fabrication and/or assembly of the third channel may be improved. In this example, the first channel side wall 110" and the second channel side wall 120" are separate parts, releasably coupled together by the set of spacers. In this example, the first spacer 160A" and/or the second spacer comprises a mechanical fastener, for example a threaded fastener such as a screw or a bolt, and/or a non-threaded fastener such as a hook, a clip or a toggle fastener.

In this example, the first spacer 160A" and/or the second spacer comprise a first rib 161A" and/or a second rib 161B, respectively, arranged transversely to the first channel side wall 110", the second channel side wall 120" and/or the third channel side wall 130. For example, the first rib 161A" may be formed from a sheet material. In this way, a strength of the third channel may be further increased. Furthermore, such ribs may allow the first side wall, the second side wall and/or the third channel side wall 130" to be formed from a sheet material provided on a coil, since such ribs may straighten these respective side walls during assembly of the third channel.

In this example, the first spacer 160A" and/or the second spacer provide a fourth channel side wall and/or a fifth channel side wall, mutually opposed and spaced apart, respectively. In other words, the first spacer 160A" and/or the second spacer may also provide end walls for the third channel. Additional spacers, for example third, fourth or fifth spacers, may be arranged, for example equidistantly, between the first spacer 160A" and the second spacer.

In this example, the first spacer 160A" is arranged to releasably couple with the first channel side wall 110" and/or with the second channel side wall 120. In other words, the first spacer 160A" releasably couples the first channel side wall 110" to the second channel side wall 120" and the first spacer 160A" is itself releasably coupled to the first channel side wall 110" and/or with the second channel side wall 120. In this way, by releasably coupling the first spacer 160A" to the first channel side wall 110" and to the second channel side wall 120", the first channel side wall 110" may be releasably coupled to the second channel side wall 120" via the first spacer 160A". The second spacer may be arranged similarly to the first spacer 160A".

In this example, the first spacer 160A" comprises a first set of male coupling members 162" and/or a second set of male coupling members 163";
wherein the first channel side wall 110" comprises a first set of female coupling members 112", corresponding with the first set of male coupling members 162"; and/or
wherein the second channel side wall 120" comprises a second set of female coupling members 123", corresponding with the second set of male coupling members 163".

In this way, the first set of male coupling members 162" and/or the second set of male coupling members 163" may be releasably coupled to the first set of female coupling members 112" and/or to the second set of female coupling members 123, respectively. In this example, the first set of male coupling members 162" and/or the second set of male coupling members 163" are integrally formed with the first spacer 160A". In this example, the first set of female coupling members 112" and/or to the second set of female coupling members 123" are integrally formed with first channel side wall 110" and/or the second channel side wall 120", respectively. The second spacer may be arranged similarly.

In this example, a male coupling member 162A" of the first set of male coupling members 162" comprises a hook 164A" and a corresponding female coupling member 112A" of the first set of female coupling members 112" is provided by an aperture 114A", for example an elongated aperture or a slot 114A", in the first channel side wall 110". In this way, the hook 164A" may be inserted into the aperture 114 and arranged, for example by sliding, whereby the hook 164A" engages with an inner surface and/or an outer surface of the first channel side wall 110", thereby facilitating assembly of the first channel 100. In this example, the first set of male coupling members 162" comprises two hooks 164A", 164B and the first set of female coupling members 112" comprises two corresponding apertures 114A", 114B. The second set of male coupling members 163" and the second set of female coupling members 123" may be arranged similarly, mutatis mutandis. The second spacer is arranged similarly. In this way, releasable coupling may be provided without using threaded fasteners, thereby facilitating assembly and/or reducing cost.

In this example, the set of spacers, including the first spacer 160A" and the second spacer is arranged to secure the third channel side wall 130" between the first channel side wall 110" and the second channel side wall 120. That is, by coupling the first channel side wall 110" and the second channel side wall 120" together via the set of spacers, the third channel side wall 130" is releasably coupled to the first channel side wall 110" and the second channel side wall 120. In this example, the first channel side wall 110", the second channel side wall 120" and the third channel side wall 130" are separate parts, releasably coupled together by the set of spacers. For example, the third channel side wall 130" may be held in compression between the first channel side wall 110" and the second channel side wall 120" by the set of spacers, which are conversely held in tension therebetween.

In this example, the first channel 100A" comprises a set of sealing members, including a first sealing member and a second sealing member, arranged between the first channel side wall 110" and the third channel side wall 130" and between the second channel side wall 120" and the third channel side wall 130", respectively. In this way, leakage of water between the first channel side wall 110" and the third channel side wall 130" and between the second channel side wall 120" and the third channel side wall 130", may be reduced. In this example, the first sealing member and/or the second sealing member comprises and/or is a gasket, for example a tape comprising an elastomeric material, and/or layer of a sealant, for example a silicone sealant such as a silicone RTV sealant.

In this example, the third channel side wall 130" comprises a first region and a second region, mutually adjacent and inclined, between the first outlet 150A" and the second outlet 150B". That is, the third channel side wall 130" may be angled, for example bent, whereby in use, water flows towards the first outlet 150A" and/or the second outlet 150B". By increasing water flowrate through the third channel (i.e. drainage of the third channel into the pipe 200), problems due, for example, to accumulation of water in the third channel may be reduced. Furthermore, debris received through the slot 141" may be transported more readily into the pipe 200", thereby preventing blockage of the third channel and/or the outlets and/or the inlets.

In this example, the first channel 100A" comprises a set of grating members, including a first grating member, arranged proximal the open side 140" and between the first channel side wall 110" and the second channel side wall 120", mutually spaced apart therefrom. In this way, admittance into the third channel of foreign objects and/or debris may be reduced. A maximum grating spacing may be mandated according to installation requirements, for example. In this example, first grating member comprises a bar and the first spacer 160A" and the second spacer include respective apertures to secure the bar therein.

Figure 12 schematically depicts a side elevation of a first channel side wall 110" of the channel 100A" of Figure 10, in more detail. The second channel side wall 120" is similar.

In this example, the blank of the first channel side wall 110" has dimensions 1125 mm long x 250 mm wide x 2.5 mm thick, formed by plasma cutting uncoated hot-rolled sheet steel according to BS EN 10051, having a thickness of 2.5 mm, and subsequently coated by hot-dipping in zinc. Generally, the first channel side wall 110" has a straight top edges and straight left and right edges, perpendicular thereto. The bottom edge include three 'teeth' (also known as castellations), that form part of the stub ends 151A" to 151C", as described below. Regions between the teeth are inclined, corresponding with the third channel side wall 130", as described below.

In this example, the first channel side wall 110" provides a part of the first stub end 151A" of the first outlet 150A", a part of the second stub end 151B" of the second outlet 150B"and a part of the third stub end 151C" of the third outlet 150C".

In this example, the first channel side wall 110" comprises the first set of female coupling members 112A", comprising the apertures 114A", 114B", 114C", arranged to couple with the first spacer 160A". In this example, the first channel side wall 110" comprises a second set of female coupling members 112B", comprising the apertures 114D", 114E", 114F", arranged to couple with the second spacer. In this example, the first channel side wall 110" comprises a third set of coupling members 112C", comprising the apertures 114G", 114H", arranged to couple with the third spacer 160C". In this example, the first channel side wall 110" comprises a fourth set of coupling members 112D", comprising the apertures 1141", 114J", arranged to couple with the fourth spacer. In this example, the first channel side wall 110" comprises a fifth set of coupling members 112E", comprising the apertures 114K", 114L", arranged to couple with the fifth spacer. In this example, the first channel side wall 110" comprises a sixth set of coupling members 112F", comprising the apertures 114M", 114N", arranged to couple with the third channel side wall portion 130A". In this example, the first channel side wall 110" comprises a seventh set of coupling members 112G", comprising the apertures 114O", 114P", arranged to couple with the third channel side wall portion 130A".

The apertures 114A", 114D", 114G", 1141"and 114K" are rectangular slots, of length 13 mm and width 3 mm, intersecting with the top edge of the first channel side wall 110". The other apertures are rectangular slots, of length 25 mm and width 3 mm, fully within the first channel side wall 110".

Figure 13 schematically depicts a side elevation of a grill of the channel of Figure 10, in more detail.

In this example, the first channel 100A" comprises a set of grating members 180", including a first grating member 180A", arranged proximal the open side 140" and between the first channel side wall 110" and the second channel side wall 120", mutually spaced apart therefrom, as described below with respect to Figure 13. In this way, admittance into the third channel of foreign objects and/or debris may be reduced. A maximum grating spacing may be mandated according to installation requirements, for example. In this example, first grating member comprises a bar 180A" and the first spacer 160A" and the second spacer include respective apertures to secure the bar 180A" therein.

In this example, the bar 180A" has dimensions 1125 mm long x 50 mm high x 2.5 mm thick, formed by plasma cutting uncoated hot-rolled sheet steel according to BS EN 10051, having a thickness of 2.5 mm, and subsequently coated by hot-dipping in zinc. In this example, the bar 180A" comprises a pair of opposed hooked coupling members 181A and 181B, having a throat of 14 mm, arranged on one side of the bar 180A" proximal opposed ends thereof, spaced 13 mm from the respective ends. In this example, the pair of opposed hooked coupling members 181A and 181B are arranged to couple with the first spacer 160A" and the second spacer, respectively. In this example, the bar 180A" comprises three slotted coupling members 182A to 182C, having a width of 3 mm and a depth of 25 mm, arranged on the one side of the bar 180A", equispaced between the pair of hooked coupling members 181A and 181B. In this example, the three slotted coupling members 182A to 182C are arranged to couple with the third to fifth spacers, respectively.

Figure 14A schematically depicts a plan view of a blank of a first spacer 160A" of the channel 100A" of Figure 10 and Figure 14B schematically depicts a side elevation of the first spacer 160A" of the channel 100A" of Figure 10, in more detail.

In this example, the blank of the first spacer 160A" has dimensions 330 mm long x 50 mm wide x 2.5 mm thick, formed by plasma cutting uncoated hot-rolled sheet steel according to BS EN 10051, having a thickness of 2.5 mm, and subsequently coated by hot-dipping in zinc. In this example, the blank is subsequently bent along two lines, orthogonal to the length of the blank, thereby forming the first spacer 160A". In this example, the first spacer 160A" provides a fourth channel side wall (i.e. an end wall), a part of the third channel side wall 130" and a part of the first stub end 151A" of the first outlet 150A" for the first channel 100A".

In this example, the first spacer 160A" comprises a first set of male coupling members 162A" and a second set of male coupling members 163A", arranged to couple with the first channel side wall 110" and the second channel side wall 120", respectively. The first set of male coupling members 162A' and the second set of male coupling members 163A" are arranged on opposed sides of the first spacer 160A". In this example, the first set of male coupling members 162A" comprises three hooks 164A" to 164C". In this example, the second set of male coupling members 163A" comprises three hooks 164D", 164F". In this example, the second spacer is as described with respect to the first spacer 160A", mutatis mutandis.

Figure 15 schematically depicts an end elevation of a third spacer 160C" of the channel 100A" of Figure 10, in more detail.

In this example, the third spacer 160C" has dimensions 125 mm long x 50 mm wide x 2.5 mm thick, formed by plasma cutting uncoated hot-rolled sheet steel according to BS EN 10051, having a thickness of 2.5 mm, and subsequently coated by hot-dipping in zinc.

In this example, the third spacer 160C" comprises a first set of male coupling members 162C" and a second set of male coupling members 163C", arranged to couple with the first channel side wall 110" and the second channel side wall 120', respectively. The first set of male coupling members 162C" and the second set of male coupling members 163C" are arranged on opposed sides of the third spacer 160C". In this example, the first set of male coupling members 162C" comprises two hooks 164G", 164H". In this example, the second set of male coupling members 163C" comprises two hooks 164I", 164J". In this example, the third spacer 160C" comprises a slotted coupling member 165, having a width of 3 mm and a depth of 25 mm, arranged to couple with the bar 180A" via the slotted coupling member 182A. In this example, the fourth and fifth spacers are as described with respect to the third spacer 160C".

Figure 16A schematically depicts a plan view of a blank of a third channel side wall 130A" of the channel of Figure 10 and Figure 16B schematically depicts a side elevation of the third channel side wall 130A'" of the channel 100A" of Figure 10, in more detail.

In this example, the third channel side wall portion 130A" comprises a first region 131" and a second region 132", mutually adjacent and inclined, between the first outlet 150A" and the second outlet 150B", as described below with respect to Figures 10 to 17.

In this example, the third channel side wall portion 130A" comprises a first set of male coupling members 132A" and a second set of male coupling members 133A", arranged to couple with the first channel side wall 110" and the second channel side wall 120', respectively. The first set of male coupling members 132A" and the second set of male coupling members 133A" are arranged on opposed sides of the third channel side wall 130A". In this example, the first set of male coupling members 132A" comprises two hooks 134A", 134B". In this example, the second set of male coupling members 133A" comprises two hooks 134C", 134D". In this example, the third channel side wall portion 130A" provides a part of the third channel side wall 130", a part of the first stub end 151A" of the first outlet 150A" and a part of the second stub end 151B" of the second outlet 150B". In this example, the third channel side wall portion 130B" is as described with respect to the third channel side wall portion 130A".

Figure 17 schematically depicts a plan view of a sheet including blanks of the channel 100A" of Figure 10. In this example, the sheet is uncoated hot-rolled sheet steel according to BS EN 10051, having dimensions 1125 long by 782 wide. In this example, the blanks of the channel 100A" are formed from the sheet by plasma cutting. Alternatively, these blanks may be formed by mechanical cutting, machining, shearing, punching or laser cutting. Other methods of forming are known.

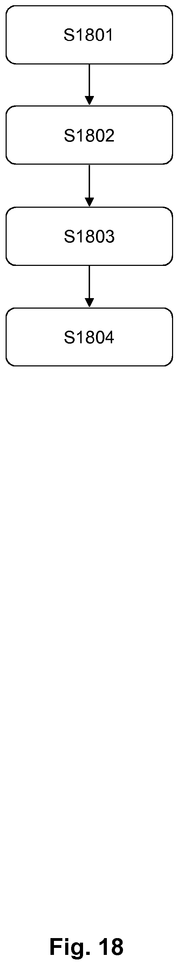

Figure 18 schematically depicts a method of installing a slot drain, for example including the slot drain section 10.

At S1801, the pipe is positioned in an excavation, wherein the first inlet and the second inlet are positioned uppermost.

At S1802, the excavation is backfilled, in part, wherein the first inlet and the second inlet remain exposed.

At S1803, the first inlet and the second outlet are coupled to the first outlet and the second outlet, respectively.

At S1804, the remainder of the excavation is backfilled.

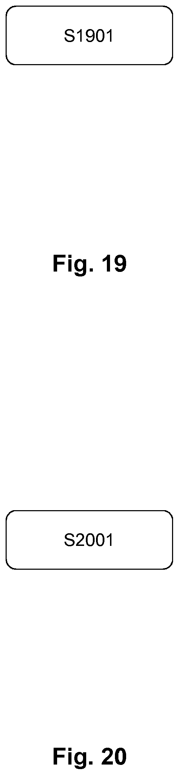

Figure 19 schematically depicts a method of assembling a channel, for example the first channel 100, for a slot drain section according to an exemplary embodiment. The channel comprises a first channel side wall and a second channel side wall, mutually opposed and spaced apart; a third channel side wall, extending between the first channel side wall and the second channel side wall; and an open side, opposed to the third channel side wall, providing a slot to receive water therethrough; wherein the third channel side wall comprises a set of outlets, including a first outlet and a second outlet, mutually spaced apart; wherein the channel comprises a set of spacers, including a first spacer and a second spacer.

At S1901, the first channel side wall and the second channel side wall are coupled with the first spacer and the second spacer.

Figure 20 schematically depicts a method of manufacturing a pipe for a slot drain section, for example the slot drain section 10. The pipe comprises a pipe side wall.

At S2001, a set of inlets, including a first inlet and a second inlet, mutually spaced apart, are provided through the pipe side wall.

Although a preferred embodiment has been shown and described, it will be appreciated by those skilled in the art that various changes and modifications might be made without departing from the scope of the invention, as defined in the appended claims and as described above.

In summary, a slot drain section, a slot drain, a method of assembling a channel for a slot drain section and a kit of parts for a slot drain section are provided. The slot drain section comprises a set of channels, including a first channel, and a pipe. The first channel comprises: an open side arranged to provide a slot to receive water therethrough; a first channel side wall and a second channel side wall, mutually opposed and spaced apart; a third channel side wall, opposed to the open side, extending between the first channel side wall and the second channel side wall; and wherein the third channel side wall comprises a set of outlets, including a first outlet and a second outlet, mutually spaced apart. The pipe comprises: a pipe side wall and a set of inlets, including a first inlet and a second inlet, mutually spaced apart and provided through the pipe side wall. The slot drain section is arrangeable in: a first configuration, wherein the first inlet and the second inlet are uncoupled from the first outlet and from the second outlet, respectively; and a second configuration, wherein the first inlet and the second inlet are releasably coupled to the first outlet and to the second outlet, respectively, and wherein the first channel and the pipe are mutually spaced apart by a first spacing. The first channel comprises a set of spacers, including a first spacer and a second spacer, arranged to space apart the first channel side wall and the second channel side wall, to releasably couple the first channel side wall and the second channel side wall and to releasably couple with the first channel side wall and with the second channel side wall; wherein the first spacer comprises a first set of male coupling members and a second set of male coupling members; wherein the first channel side wall comprises a first set of female coupling members, corresponding with the first set of male coupling members; and wherein the second channel side wall comprises a second set of female coupling members, corresponding with the second set of male coupling members. Since the slot drain section is arrangeable in the first configuration, in which the first channel and the pipe are separate (i.e. mutually uncoupled), storage and/or transportation of the slot drain section is facilitated. Furthermore, since the slot drain section is arrangeable in the first configuration, in which the first channel and the pipe are separate (i.e. mutually uncoupled), installation of the slot drain section is facilitated. In the second configuration (i.e. an in use or installed configuration), the slot provides rapid clearance of surface water. The water received through the slot flows through the first channel, for example over the third channel side wall, into the pipe via the first outlet and/or the second outlet and the first inlet and/or the second inlet, respectively. The pipe provides at least a part of an accumulator and thus the water is accumulated in the pipe and may be discharged, for example downstream of the pipe, at an attenuated flowrate, via a flow attenuator, into a drainage system. Thus, the slot drain, in the second configuration, synergistically integrates three functions: the slot for rapid clearance of the surface water, transport of the water in the pipe and accumulation of the water in the pipe, discharge of which into the drainage system is attenuated by the flow attenuator. It should be understood that in the second configuration, the slot drain section and the pipe are subterranean, while the slot is exposed to the surface. In this way, attenuation of surface water discharged into drainage systems may be improved.

## Claims

1. A slot drain section (10) comprising a set of channels (100), including a first channel (100A), and a pipe (200);
wherein the first channel (100A) comprises:
an open side (141) arranged to provide a slot (141) to receive water therethrough;
a first channel side wall (110) and a second channel side wall (120), mutually opposed and spaced apart;
a third channel side wall (130), opposed to the open side (141), extending between the first channel side wall (110) and the second channel side wall (120); and
wherein the third channel side wall (130) comprises a set of outlets (150), including a first outlet (150A) and a second outlet (150B), mutually spaced apart;
wherein the pipe (200) comprises:
a pipe side wall (210) and a set of inlets (250), including a first inlet (250A) and a second inlet (250B), mutually spaced apart and provided through the pipe side wall (210);
wherein the slot drain section (10) is arrangeable in:
a first configuration, wherein the first inlet (250A) and the second inlet (250B) are uncoupled from the first outlet (150A) and from the second outlet (150B), respectively; and
a second configuration, wherein the first inlet (250A) and the second inlet (250B) are releasably coupled to the first outlet (150A) and to the second outlet (150B), respectively, and
wherein the first channel (100A) and the pipe (200) are mutually spaced apart by a first spacing;
**characterised in that** the first channel (100A) comprises a set of spacers, including a first spacer and a second spacer, arranged to space apart the first channel side wall (110) and the second channel side wall (120), to releasably couple the first channel side wall (110) and the second channel side wall (120) and to releasably couple with the first channel side wall (110) and with the second channel side wall (120);
wherein the first spacer comprises a first set of male coupling members and a second set of male coupling members;
wherein the first channel side wall (110) comprises a first set of female coupling members, corresponding with the first set of male coupling members; and
wherein the second channel side wall (120) comprises a second set of female coupling members, corresponding with the second set of male coupling members.

2. The slot drain section (10) according to claim 1, wherein the first outlet (150A) and the second outlet (150B) comprise a first stub end (151A) and a second stub end (151B), respectively and wherein the first inlet (250A) and the second inlet (250B) comprise a first socket (251A) and a second socket (251B), respectively.

3. The slot drain section (10) according to any previous claim, comprising a set of conduits (300), including a first conduit (300A) and a second conduit (300B), arrangeable to releasably couple the first inlet (250A) and the second inlet (250B) to the first outlet (150A) and the second outlet (150B), respectively.

4. The slot drain section (10) according to any previous claim, wherein the slot drain section (10) is arrangeable in:
a third configuration, wherein the first inlet (250A) and the second inlet (250B) are releasably coupled to the first outlet (150A) and the second outlet (150B), respectively, and wherein the first channel (100A) and the pipe (200) are mutually spaced apart by a second spacing.

5. The slot drain section (10) according to any previous claim, wherein the first spacer and/or the second spacer comprise a first rib and/or a second rib, respectively, arranged transversely to the third channel side wall (130).

6. The slot drain section (10) according to any previous claim, wherein the first spacer and/or the second spacer provide a fourth channel side wall and/or a fifth channel side wall, mutually opposed and spaced apart, respectively.

7. The slot drain section (10) according to any previous claim, wherein a male coupling member of the first set of male coupling members comprises a hook and wherein a corresponding female coupling member of the first set of female coupling members is provided by an aperture in the first channel side wall.

8. The slot drain section (10) according to any previous claim, wherein the set of spacers, including the first spacer and the second spacer, is arranged to secure the third channel side wall (130) between the first channel side wall (110) and the second channel side wall (120).

9. The slot drain section (10) according to any previous claim, wherein the first channel (100A) comprises a set of sealing members, including a first sealing member and a second sealing member, arranged between the first channel side wall (110) and the third channel side wall (130) and between the second channel side wall (120) and the third channel side wall (130), respectively.

10. The slot drain section (10) according to any previous claim, wherein the third channel side wall (130) comprises a first region and a second region, mutually adjacent and inclined, between the first outlet (150A) and the second outlet (150B).

11. The slot drain section (10) according to any previous claim, comprising a set of adjustable feet.

12. A slot drain (1) comprising a slot drain section (10) according to any previous claim, a first pipe end wall, a second pipe end wall and a flow attenuator;
wherein the flow attenuator is arranged to attenuate, in use, a flowrate of water out of the pipe.

13. A kit of parts for a slot drain section (10) according to any of claims 1 to 11 comprising a set of channels (100), including a first channel (100A), and a pipe (200), the kit comprising:
a first channel side wall (110), a second channel side wall (120), a third channel side wall (130) and a pipe,
wherein the third channel side wall (130) comprises a set of outlets (150), including a first outlet (150A) and a second outlet (150B), mutually spaced apart;
wherein the pipe (200) comprises a pipe side wall (210) and a set of inlets (250), including a first inlet (250A) and a second inlet (250B), mutually spaced apart and provided through the pipe side wall (210),
**characterised by** the kit further comprising a set of spacers, including a first spacer and a second spacer, for spacing apart the first channel side wall (110) and the second channel side wall (120), for releasably coupling the first channel side wall (110) and the second channel side wall (120) and for releasably coupling with the first channel side wall (110) and with the second channel side wall (120); wherein the first spacer comprises a first set of male coupling members and a second set of male coupling members;
wherein the first channel side wall (110) comprises a first set of female coupling members, corresponding with the first set of male coupling members; and
wherein the second channel side wall (120) comprises a second set of female coupling members, corresponding with the second set of male coupling members.

14. A method of assembling a channel (100) for a slot drain section (10) according to any of claims 1 to 11, **characterised in that** the method comprises: a step of coupling (S1901), with the first spacer and the second spacer, the first channel side wall (110) and the second channel side wall (120).

## Patentansprüche

1. Schlitzrinneabschnitt (10), umfassend einen Satz von Kanälen (100), einschließlich eines ersten Kanals (100A), und ein Rohr (200);
wobei der erste Kanal (100A) umfasst:
eine offene Seite (141), die dazu angeordnet ist, einen Schlitz (141) bereitzustellen, um Wasser durch diesen hindurch zu empfangen;
eine erste Kanalseitenwand (110) und eine zweite Kanalseitenwand (120), die einander gegenüberliegen und voneinander beabstandet sind;
eine dritte Kanalseitenwand (130), die der offenen Seite (141) gegenüberliegt und sich zwischen der ersten Kanalseitenwand (110) und der zweiten Kanalseitenwand (120) erstreckt; und
wobei die dritte Kanalseitenwand (130) einen Satz von Auslässen (150) einschließlich eines ersten Auslasses (150A) und eines zweiten Auslasses (150B) umfasst, die voneinander beabstandet sind;
wobei das Rohr (200) umfasst:
eine Rohrseitenwand (210) und einen Satz von Einlässen (250) einschließlich eines ersten Einlasses (250A) und eines zweiten Einlasses (250B), die voneinander beabstandet sind und durch die Rohrseitenwand (210) hindurch vorgesehen sind;
wobei der Schlitzrinneabschnitt (10) anordenbar ist in:
einer ersten Ausbildung, wobei der erste Einlass (250A) und der zweite Einlass (250B) vom ersten Auslass (150A) bzw. vom zweiten Auslass (150B) abgekoppelt sind; und
einer zweiten Ausbildung, wobei der erste Einlass (250A) und der zweite Einlass (250B) lösbar mit dem ersten Auslass (150A) bzw. mit dem zweiten Auslass (150B) gekoppelt sind, und
wobei der erste Kanal (100A) und das Rohr (200) um einen ersten Abstand voneinander beabstandet sind;
**dadurch gekennzeichnet, dass** der erste Kanal (100A) einen Satz von Abstandshaltern einschließlich eines ersten Abstandshalters und eines zweiten Abstandshalters umfasst, die dazu angeordnet sind, die erste Kanalseitenwand (110) und die zweite Kanalseitenwand (120) voneinander zu beabstanden, die erste Kanalseitenwand (110) und die zweite Kanalseitenwand (120) lösbar zu koppeln und mit der ersten Kanalseitenwand (110) und der zweiten Kanalseitenwand (120) lösbar zu koppeln;
wobei der erste Abstandshalter einen ersten Satz von Steckkupplungselementen und einen zweiten Satz von Steckkupplungselementen umfasst;
wobei die erste Kanalseitenwand (110) einen ersten Satz von Buchsenkupplungselementen umfasst, die mit dem ersten Satz von Steckkupplungselementen korrespondieren; und
wobei die zweite Kanalseitenwand (120) einen zweiten Satz von Buchsenkupplungselementen umfasst, die mit dem zweiten Satz von Steckkupplungselementen korrespondieren.

2. Schlitzrinneabschnitt (10) gemäß Anspruch 1, wobei der erste Auslass (150A) und der zweite Auslass (150B) ein erstes Stutzenende (151A) bzw. ein zweites Stutzenende (151B) umfassen und wobei der erste Einlass (250A) und der zweite Einlass (250B) einen ersten Stutzen (251A) bzw. einen zweiten Stutzen (251B) umfassen.

3. Schlitzrinneabschnitt (10) gemäß einem der vorhergehenden Ansprüche, umfassend einen Satz von Leitungen (300) einschließlich einer ersten Leitung (300A) und einer zweiten Leitung (300B), die dazu anordenbar sind, den ersten Einlass (250A) und den zweiten Einlass (250B) mit dem ersten Auslass (150A) bzw. dem zweiten Auslass (150B) lösbar zu koppeln.

4. Schlitzrinneabschnitt (10) gemäß einem der vorhergehenden Ansprüche, wobei der Schlitzrinneabschnitt (10) anordenbar ist in:
einer dritten Ausbildung, wobei der erste Einlass (250A) und der zweite Einlass (250B) lösbar mit dem ersten Auslass (150A) bzw. dem zweiten Auslass (150B) gekoppelt sind und wobei der erste Kanal (100A) und das Rohr (200) durch einen zweiten Abstand voneinander beabstandet sind.

5. Schlitzrinneabschnitt (10) gemäß einem der vorhergehenden Ansprüche, wobei der erste Abstandshalter und/oder der zweite Abstandshalter eine erste Rippe bzw. eine zweite Rippe umfasst, die quer zur dritten Kanalseitenwand (130) angeordnet ist.

6. Schlitzrinneabschnitt (10) gemäß einem der vorhergehenden Ansprüche, wobei der erste Abstandshalter und/oder der zweite Abstandshalter eine vierte Kanalseitenwand und/oder eine fünfte Kanalseitenwand bilden, die einander gegenüberliegen bzw. voneinander beabstandet sind.

7. Schlitzrinneabschnitt (10) gemäß einem der vorhergehenden Ansprüche, wobei ein Steckkopplungselement des ersten Satzes von Steckkopplungselementen einen Haken aufweist und wobei ein entsprechendes Buchsenkopplungselement des ersten Satzes von Buchsenkopplungselementen durch eine Öffnung in der ersten Kanalseitenwand vorgesehen ist.

8. Schlitzrinneabschnitt (10) gemäß einem der vorhergehenden Ansprüche, wobei der Satz von Abstandshaltern einschließlich des ersten Abstandshalters und des zweiten Abstandshalters dazu angeordnet ist, die dritte Kanalseitenwand (130) zwischen der ersten Kanalseitenwand (110) und der zweiten Kanalseitenwand (120) zu befestigen.

9. Schlitzrinneabschnitt (10) gemäß einem der vorhergehenden Ansprüche, wobei der erste Kanal (100A) einen Satz von Dichtungselementen einschließlich eines ersten Dichtungselements und eines zweiten Dichtungselements umfasst, die zwischen der ersten Kanalseitenwand (110) und der dritten Kanalseitenwand (130) bzw. zwischen der zweiten Kanalseitenwand (120) und der dritten Kanalseitenwand (130) angeordnet sind.

10. Schlitzrinneabschnitt (10) gemäß einem der vorhergehenden Ansprüche, wobei die dritte Kanalseitenwand (130) zwischen dem ersten Auslass (150A) und dem zweiten Auslass (150B) einen ersten Bereich und einen zweiten Bereich aufweist, die aneinander angrenzen und geneigt sind.

11. Schlitzrinneabschnitt (10) gemäß einem der vorhergehenden Ansprüche, der einen Satz verstellbarer Füße umfasst.

12. Schlitzrinne (1), umfassend einen Schlitzrinneabschnitt (10) gemäß einem der vorhergehenden Ansprüche, eine erste Rohrendwand, eine zweite Rohrendwand und einen Durchflussdämpfer;
wobei der Durchflussdämpfer dazu angeordnet ist, beim Betrieb eine Durchflussrate von Wasser aus dem Rohr zu dämpfen.

13. Teilekit für einen Schlitzrinneabschnitt (10) gemäß einem der Ansprüche 1 bis 11, umfassend einen Satz von Kanälen (100) einschließlich eines ersten Kanals (100A), und ein Rohr (200), wobei das Kit umfasst:
eine erste Kanalseitenwand (110), eine zweite Kanalseitenwand (120), eine dritte Kanalseitenwand (130) und ein Rohr,
wobei die dritte Kanalseitenwand (130) einen Satz von Auslässen (150) einschließlich eines ersten Auslasses (150A) und eines zweiten Auslasses (150B) umfasst, die voneinander beabstandet sind;
wobei das Rohr (200) eine Rohrseitenwand (210) und einen Satz von Einlässen (250) einschließlich eines ersten Einlasses (250A) und eines zweiten Einlasses (250B) umfasst, die voneinander beabstandet sind und durch die Rohrseitenwand (210) hindurch vorgesehen sind,
**dadurch gekennzeichnet, dass** das Kit ferner umfasst:
einen Satz von Abstandshaltern einschließlich eines ersten Abstandshalters und eines zweiten Abstandshalters zum Beabstanden der ersten Kanalseitenwand (110) und der zweiten Kanalseitenwand (120), zum lösbaren Koppeln der ersten Kanalseitenwand (110) und der zweiten Kanalseitenwand (120) und zum lösbaren Koppeln mit der ersten Kanalseitenwand (110) und mit der zweiten Kanalseitenwand (120);
wobei der erste Abstandshalter einen ersten Satz von Steckkupplungselementen und einen zweiten Satz von Steckkupplungselementen umfasst;
wobei die erste Kanalseitenwand (110) einen ersten Satz von Buchsenkupplungselementen umfasst, die mit dem ersten Satz von Steckkupplungselementen korrespondieren; und
wobei die zweite Kanalseitenwand (120) einen zweiten Satz von Buchsenkupplungselementen umfasst, die mit dem zweiten Satz von Steckkupplungselementen korrespondieren.

14. Verfahren zum Zusammenbauen eines Kanals (100) für einen Schlitzrinneabschnitt (10) gemäß einem der Ansprüche 1 bis 11, **dadurch gekennzeichnet, dass** das Verfahren umfasst:
einen Schritt zum Koppeln (S1901) mit dem ersten Abstandshalter und dem zweiten Abstandshalter, der ersten Kanalseitenwand (110) und der zweiten Kanalseitenwand (120) .

## Revendications

1. Section (10) de drain à fente comportant un ensemble de canaux (100), comprenant un premier canal (100A), et un tuyau (200) ;
le premier canal (100A) comportant :
un côté ouvert (141) disposé pour ménager une fente (141) afin de recevoir de l'eau à travers celle-ci ;
une première paroi latérale (110) de canal et une deuxième paroi latérale (120) de canal, mutuellement opposées et espacées ;
une troisième paroi latérale (130) de canal, opposée au côté ouvert (141), s'étendant entre la première paroi latérale (110) de canal et la deuxième paroi latérale (120) de canal ; et
la troisième paroi latérale (130) de canal comportant un ensemble de sorties (150), comprenant une première sortie (150A) et une deuxième sortie (150B), mutuellement espacées ;
le tuyau (200) comportant :
une paroi latérale (210) de tuyau et un ensemble d'entrées (250), comprenant une première entrée (250A) et une deuxième entrée (250B), mutuellement espacées et ménagées à travers la paroi latérale (210) de tuyau ;
la section (10) de drain à fente pouvant être disposée dans :
une première configuration, dans laquelle la première entrée (250A) et la deuxième entrée (250B) sont découplées de la première sortie (150A) et de la deuxième sortie (150B), respectivement ; et
une deuxième configuration, dans laquelle la première entrée (250A) et la deuxième entrée (250B) sont couplées de manière détachable à la première sortie (150A) et à la deuxième sortie (150B), respectivement, et
dans laquelle le premier canal (100A) et le tuyau (200) sont mutuellement espacés d'un premier espacement ;
**caractérisé en ce que** le premier canal (100A) comporte un ensemble d'entretoises, comprenant une première entretoise et une deuxième entretoise, disposées pour espacer la première paroi latérale (110) de canal et la deuxième paroi latérale (120) de canal, pour coupler de manière détachable la première paroi latérale (110) de canal et la deuxième paroi latérale (120) de canal et pour se coupler de manière détachable avec la première paroi latérale (110) de canal et avec la deuxième paroi latérale (120) de canal ;
la première entretoise comportant un premier ensemble d'éléments de couplage mâles et un deuxième ensemble d'éléments de couplage mâles ;
la première paroi latérale (110) de canal comportant un premier ensemble d'éléments de couplage femelles,
correspondant au premier ensemble d'éléments de couplage mâles ; et
la deuxième paroi latérale (120) de canal comportant un deuxième ensemble d'éléments de couplage femelles,
correspondant au deuxième ensemble d'éléments de couplage mâles.

2. Section (10) de drain à fente selon la revendication 1, la première sortie (150A) et la deuxième sortie (150B) comportant respectivement un premier embout (151A) et un deuxième embout (151B), et la première entrée (250A) et la deuxième entrée (250B) comportant respectivement un premier alvéole (251A) et un deuxième alvéole (251B).

3. Section (10) de drain à fente selon l'une quelconque des revendications précédentes, comportant un ensemble de conduits (300), comprenant un premier conduit (300A) et un deuxième conduit (300B), pouvant être disposés pour coupler de manière détachable la première entrée (250A) et la deuxième entrée (250B) à la première sortie (150A) et à la deuxième sortie (150B), respectivement.

4. Section (10) de drain à fente selon l'une quelconque des revendications précédentes, la section (10) de drain à fente pouvant être disposée dans :
une troisième configuration, dans laquelle la première entrée (250A) et la deuxième entrée (250B) sont couplées de manière détachable à la première sortie (150A) et à la deuxième sortie (150B), respectivement, et dans laquelle le premier canal (100A) et le tuyau (200) sont mutuellement espacés d'un deuxième espacement.

5. Section (10) de drain à fente selon l'une quelconque des revendications précédentes, la première entretoise et/ou la deuxième entretoise comportant une première nervure et/ou une deuxième nervure, respectivement, disposées transversalement à la troisième paroi latérale (130) de canal.

6. Section (10) de drain à fente selon l'une quelconque des revendications précédentes, la première entretoise et/ou la deuxième entretoise constituant respectivement une quatrième paroi latérale de canal et/ou une cinquième paroi latérale de canal, mutuellement opposées et espacées.

7. Section (10) de drain à fente selon l'une quelconque des revendications précédentes, un élément de couplage mâle du premier ensemble d'éléments de couplage mâles comportant un croc et un élément de couplage femelle correspondant du premier ensemble d'éléments de couplage femelles étant constitué par une ouverture dans la première paroi latérale de canal.

8. Section (10) de drain à fente selon l'une quelconque des revendications précédentes, l'ensemble d'entretoises, comprenant la première entretoise et la deuxième entretoise, étant disposé pour immobiliser la troisième paroi latérale (130) de canal entre la première paroi latérale (110) de canal et la deuxième paroi latérale (120) de canal.

9. Section (10) de drain à fente selon l'une quelconque des revendications précédentes, le premier canal (100A) comportant un ensemble d'éléments d'étanchéité, comprenant un premier élément d'étanchéité et un deuxième élément d'étanchéité, disposés entre la première paroi latérale (110) de canal et la troisième paroi latérale (130) de canal et entre la deuxième paroi latérale (120) de canal et la troisième paroi latérale (130) de canal, respectivement.

10. Section (10) de drain à fente selon l'une quelconque des revendications précédentes, la troisième paroi latérale (130) de canal comportant une première région et une deuxième région, mutuellement adjacentes et inclinées, entre la première sortie (150A) et la deuxième sortie (150B).

11. Section (10) de drain à fente selon l'une quelconque des revendications précédentes, comportant un ensemble de pieds réglables.

12. Drain (1) à fente comportant une section (10) de drain à fente selon l'une quelconque des revendications précédentes, une première paroi d'extrémité de tuyau, une deuxième paroi d'extrémité de tuyau et un atténuateur de débit ;
l'atténuateur de débit étant disposé pour atténuer, en cours d'utilisation, un débit d'eau sortant du tuyau.

13. Kit de pièces pour une section (10) de drain à fente selon l'une quelconque des revendications 1 à 11 comportant un ensemble de canaux (100), comprenant un premier canal (100A), et un tuyau (200), le kit comportant :
une première paroi latérale (110) de canal, une deuxième paroi latérale (120) de canal, une troisième paroi latérale (130) de canal et un tuyau,
la troisième paroi latérale (130) de canal comportant un ensemble de sorties (150), comprenant une première sortie (150A) et une deuxième sortie (150B), mutuellement espacées ;
le tuyau (200) comportant une paroi latérale (210) de tuyau et un ensemble d'entrées (250), comprenant une première entrée (250A) et une deuxième entrée (250B), mutuellement espacées et ménagées à travers la paroi latérale (210) de tuyau,
**caractérisé en ce que** le kit comporte en outre :
un ensemble d'entretoises, comprenant une première entretoise et une deuxième entretoise, destinées à espacer la première paroi latérale (110) de canal et la deuxième paroi latérale (120) de canal, à coupler de manière détachable la première paroi latérale (110) de canal et la deuxième paroi latérale (120) de canal et à se coupler de manière détachable avec la première paroi latérale (110) de canal et avec la deuxième paroi latérale (120) de canal ;
la première entretoise comportant un premier ensemble d'éléments de couplage mâles et un deuxième ensemble d'éléments de couplage mâles ;
la première paroi latérale (110) de canal comportant un premier ensemble d'éléments de couplage femelles, correspondant au premier ensemble d'éléments de couplage mâles ; et
la deuxième paroi latérale (120) de canal comportant un deuxième ensemble d'éléments de couplage femelles, correspondant au deuxième ensemble d'éléments de couplage mâles.

14. Procédé d'assemblage d'un canal (100) destiné à une section (10) de drain à fente selon l'une quelconque des revendications 1 à 11, **caractérisé en ce que** le procédé comporte ;
une étape consistant à coupler (S1901), à l'aide de la première entretoise et de la deuxième entretoise, la première paroi latérale (110) de canal et la deuxième paroi latérale (120) de canal.
